(19) Europäisches Patentamt / European Patent Office / Office européen des brevets

(11) EP 3 036 292 B1

(12) **EUROPÄISCHE PATENTSCHRIFT**

(45) Veröffentlichungstag und Bekanntmachung des Hinweises auf die Patenterteilung:
**02.01.2019 Patentblatt 2019/01**

(21) Anmeldenummer: **14750735.4**

(22) Anmeldetag: **13.08.2014**

(51) Int Cl.:
***C09D 7/00*** (2018.01) ***C09D 151/06*** (2006.01)
***C08F 265/04*** (2006.01) ***C08J 9/28*** (2006.01)
***C08F 2/22*** (2006.01)

(86) Internationale Anmeldenummer:
**PCT/EP2014/067332**

(87) Internationale Veröffentlichungsnummer:
**WO 2015/024835 (26.02.2015 Gazette 2015/08)**

(54) **VERFAHREN ZUR HERSTELLUNG VON EMULSIONSPOLYMERISATEN**

METHOD FOR MANUFACTURING EMULSION POLYMERISATES

PROCÉDÉ DE FABRICATION DE POLYMÈRES EN ÉMULSION

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **22.08.2013 EP 13181404**

(43) Veröffentlichungstag der Anmeldung:
**29.06.2016 Patentblatt 2016/26**

(73) Patentinhaber: **BASF SE**
**67056 Ludwigshafen am Rhein (DE)**

(72) Erfinder:
- **KEHRLÖSSER, Daniel**
  **68161 Mannheim (DE)**
- **LESWIN, Joost**
  **68309 Mannheim (DE)**
- **SPECKER, Daniel**
  **68259 Mannheim (DE)**
- **ROSCHMANN, Konrad**
  **68526 Ladenburg (DE)**
- **GERST, Matthias**
  **67487 Maikammer (DE)**
- **WIESE, Harm**
  **69514 Laudenbach (DE)**

(74) Vertreter: **BASF IP Association**
**BASF SE**
**G-FLP-C006**
**67056 Ludwigshafen (DE)**

(56) Entgegenhaltungen:
**EP-A1- 2 511 312**
**WO-A1-2008/071687**
**WO-A1-2011/009875**
**JP-A- 2005 187 709**

Anmerkung: Innerhalb von neun Monaten nach Bekanntmachung des Hinweises auf die Erteilung des europäischen Patents im Europäischen Patentblatt kann jedermann nach Maßgabe der Ausführungsordnung beim Europäischen Patentamt gegen dieses Patent Einspruch einlegen. Der Einspruch gilt erst als eingelegt, wenn die Einspruchsgebühr entrichtet worden ist. (Art. 99(1) Europäisches Patentübereinkommen).

EP 3 036 292 B1

## Beschreibung

Die vorliegende Erfindung betrifft ein Verfahren zur Herstellung von organischen Hohlteilchen mit einer Kern-Schale-Struktur, wobei im Kern mindestens ein nicht-ionisches polyalkylenoxidhaltiges Additiv verwendet wird, sowie deren Verwendung in Anstrichmitteln, Papierbeschichtungen, Schäumen, Pflanzenschutzmitteln, Tinten und kosmetischen Mitteln.

Organische Hohlteilchen sind eine besondere Art von Kern-Schale-Teilchen, die in getrockneter Form aus einem luftgefüllten Hohlraum, umgeben von einer harten Hülle bestehen. Aufgrund dieses Aufbaus haben sie die besondere Eigenschaft, Licht zu streuen, wodurch ihr Einsatz als Weißpigment in Anstrichmitteln, Papierbeschichtungen und in kosmetischen Mitteln, beispielsweise Sonnencremes begründet liegt. Dort ersetzen sie teilweise das anorganische Weißpigment Titandioxid und verstärken zusätzlich die Wirkung des verbliebenen $TiO_2$.

C. J. McDonald und M. J. Devon beschreiben in Advances in Colloid and Interface Science 2002, 99, 181-213 eine Reihe von Möglichkeiten zur Herstellung dieser Hohlteilchen wie unter anderem die Quellung mit organischen Lösungsmitteln oder Treibmitteln, Verkapselung von Kohlenwasserstoffen oder Ansätze aufbauend auf W/O/W-Emulsionen. Die aus ökologischen wie auch aus ökonomischen Gründen bevorzugte Methode ist allerdings die osmotische Quellung spezieller Kern-Schale-Teilchen.

EP 0 915 108, EP 1 904 544 und EP 2 511 312 sowie US 8, 013, 081 beschreiben diesen Prozess grundlegend. Auch JP 2005-187709 beschreibt einen solchen Prozess. Nachteil des Standes der Technik ist es jedoch, dass die beschriebenen Hohlteilchen mit einer geringen Schalendicke bei der Trocknung ohne den Einsatz von mehr als 10 Gew. % Vernetzer, bezogen auf das Gewicht der äußersten Schale, in der äußersten Schale kollabieren. Dieser Nachteil des Standes der Technik konnte durch den Einsatz von polyalkylenoxidhaltigen nicht-ionischen Additiven im Kern, die während der Trocknung der Teilchen die strukturelle Integrität der Schale gewährleisten, behoben werden. Die nach dem erfindungsgemäßen Verfahren hergestellten Polymerisate weisen dadurch eine deutlich verbesserte Streueffizienz auf.

Die Aufgabe der vorliegenden Erfindung war die Entwicklung eines Herstellverfahrens für Emulsionspolymerteilchen, insbesondere für organische Hohlteilchen, die einen gegenüber dem Stand der Technik verbesserten Weißgrad aufweisen.

Die erfindungsgemäße Aufgabe wurde durch das nachfolgend beschriebene Verfahren gelöst:
Verfahren zur Herstellung von organischen Hohlteilchen durch Herstellung eines Mehrstufen-emulsionspolymers durch sequentielle Polymerisation

(i) wobei das Mehrstufen-Emulsionspolymer mindestens ein Kernstufenpolymer und ein Hüllstufenpolymer umfasst, und das Kernstufenpolymer als polymerisierte Einheiten von 5 bis 99,5 Gew.-%, bezogen auf das Gewicht des Kernstufenpolymers, eines hydrophilen ethylenisch ungesättigten Monomers, und von 0 bis 95 Gew.-%, bezogen auf das Gewicht des Kernstufenpolymers, mindestens eines nicht-ionischen ethylenisch ungesättigtem Monomers sowie 0,5 $_{[DK1]}$ bis 20 Gew.-%, bevorzugt 1 bis 5 Gew.-%, mindestens eines nicht-ionischen polyalkylenoxidhaltigen Additivs, bezogen auf das Gewicht des Kernstufenpolymers umfasst, und wobei das Hüllstufenpolymer als polymerisierte Einheiten mindestens 50 Gew.-% eines nicht-ionischen ethylenisch ungesättigten Monomers umfasst, sowie

ii) Neutralisation bis zu einem pH-Wert von mindestens 7,5$_{[DK2]}$, der so gebildeten Partikel mit mindestens einer Base sowie gegebenenfalls Polymerisation weiterer Schalen enthaltend mindestens ein nicht-ionisches ethylenisch ungesättigtes Monomer. $_{[DK3]}$

Ein weiterer Gegenstand der Erfindung ist ein Verfahren zur Herstellung von organischen Hohlteilchen durch Herstellung eines Mehrstufenemulsionspolymers durch sequentielle Polymerisation

(i) wobei das Mehrstufen-Emulsionspolymer mindestens ein Kernstufenpolymer und ein Hüllstufenpolymer umfasst, und das Kernstufenpolymer als polymerisierte Einheiten von 5 bis 99,5 Gew.-%, bezogen auf das Gewicht des Kernstufenpolymers, eines hydrophilen ethylenisch ungesättigten Monomers, und von 0 bis 95 Gew.-% bezogen auf das Gewicht des Kernstufenpolymers, mindestens eines nicht-ionischen ethylenisch ungesättigtem Monomers sowie 0,5 bis 20 Gew.-%, bevorzugt 1 bis 5 Gew.-%, mindestens eines nicht-ionischen polyalkylenoxidhaltigen Additivs bezogen auf das Gewicht des Kernstufenpolymers umfasst, und wobei das Hüllstufenpolymer als polymerisierte Einheiten mindestens 50 Gew.-% eines nicht-ionischen ethylenisch ungesättigten Monomers umfasst, sowie

ii) Neutralisation bis zu einem pH-Wert von mindestens 7,5$_{[DK4]}$, der so gebildeten Partikel mit mindestens einer Base, in Anwesenheit von mindestens 0,5 Gew.-% eines nicht-ionischen ethylenisch ungesättigten Weichmachermonomers, bezogen auf das Gesamtgewicht des Mehrstufen-Emulsionspolymers,

iii) anschließende Polymerisation des nicht-ionischen ethylenisch ungesättigten Weichmachermonomers gegebenenfalls durch weitere Zugabe eines oder mehrerer nicht-ionisch ethylenisch ungesättigter Monomere

iv) sowie gegebenenfalls Polymerisation weiterer Schalen enthaltend mindestens ein nicht-ionisches ethylenisch ungesättigtes Monomer.

Ein weiterer Gegenstand der Erfindung sind die nach den beiden Verfahren erhältlichen Polymerteilchen.

Ein weiterer Gegenstand der Erfindung ist die Verwendung der erfindungsgemäß erhältlichen organischen Hohlteilchen in Anstrichmitteln, Papierbeschichtungen, Schäumen, Pflanzenschutzmitteln, Tinten oder kosmetischen Mitteln, sowie Anstrichmittel, Papier, Schäume, Pflanzenschutzmittel, Tinten oder kosmetische Mittel enthaltend die erfindungsgemäß erhältlichen organischen Hohlteilchen. Ein noch weiterer Gegenstand der Erfindung ist die Verwendung der polyalkylenoxidhaltigen Additive zur Herstellung von organischen Hohlteilchen mit verbessertem Weißgrad.

Ein Vorteil der Erfindung liegt darin, dass durch den beschriebenen Einsatz mindestens eines nicht-ionischen polyalkylenoxidhaltigen Additives im Kern gegenüber dem Stand der Technik bei der Trocknung der Teilchen die strukturelle Integrität der Schale gewährleistet bleibt, ohne dass in der äußersten Schale mehr als 10 Gew. % eines Vernetzers, bezogen auf das Gewicht der äußersten Schale, eingesetzt werden muss. Hierdurch können dünnere Schalen erzeugt werden, was bei gleichbleibendem Feststoffgehalt zu einer Erhöhung der Teilchenzahl führt, welche mit einem in Summe größeren Gesamthohlraum der Polymerisate gleichbedeutend ist. Dies führt zu einer deutlichen Verbesserung im Weißgrad und umgeht so diesen Nachteil des Standes der Technik.

Bei der beschriebenen Erfindung handelt es sich um eine mehrstufige sequentielle Emulsionspolymerisation. Sequentiell bezieht sich auf die Durchführung der einzelnen Stufen, wobei auch jede einzelne Stufe aus mehreren sequentiellen Schritten aufgebaut sein kann.

Das Kernstufenpolymer kann sowohl eine Saat als auch eine Quellsaat umfassen, wobei die Saat mindestens 0,5 bis 20 Gew.-%, bevorzugt 1 bis 5 Gew.-% mindestens eines nicht-ionischen polyalkylenoxid-haltigen Additives,$_{\text{[DK5]}}$ bezogen auf das Gesamtgewicht des Kernstufenpolymers, enthält, und diese Saat anschließend mit einem Monomerengemisch, enthaltend 5 bis 99,5 Gew.-% bevorzugt 60 bis 80 Gew.-% mindestens eines nicht-ionischen ethylenisch ungesättigten Monomers, 0 bis 95 Gew.-% bevorzugt 20 bis 40 Gew.% mindestens eines ethylenisch ungesättigten hydrophilen Monomers, jeweils bezogen auf das Gesamtgewicht des Kernstufenpolymers, zu der Quellsaat umgesetzt wird.

Der Begriff "Saat " bezieht sich auf eine wässrige Polymerdispersion, die zu Beginn der Mehrstufenpolymerisation eingesetzt wird und das Produkt aus einer Emulsionspolymerisation ist, oder auf eine wässrige Polymerdispersion, die am Ende einer der Polymerisationsstufen zur Herstellung der Hohlteilchendispersion, mit Ausnahme der letzten Stufe, vorliegt.

Die Saat, die zu Beginn der Polymerisation der ersten Stufe eingesetzt wird, kann sowohl in einem getrennten Schritt vorab als auch in situ hergestellt werden.

Die Saat enthält bevorzugt aus Polymere ausgewählt aus der Gruppe Styrol, Acrylsäure, Methacrylsäure, Estern der Acrylsäure und Methacrylsäure oder Copolymeren davon, sowie mindestens ein nicht-ionisches polyalkylenoxidhaltiges Additiv.

Die mittlere Teilchengröße des Saatpolymers im ungequollenen Zustand beträgt 20 bis 100 nm.

Unter polyalkylenoxid-haltigen nicht-ionischen Additiven versteht man Polysiloxan-Polyalkylen-oxid-Copolymere, wie Polysiloxan-Polyalkylenoxid-graft-Copolymere mit Kammstruktur, Polysiloxan-Polyalkylenoxid-graft-Copolymere mit $\alpha$-$\omega$-Struktur, Polysiloxan-Polyalkylenoxid-graft-Copolymere mit ABA oder BAB Blockstrukturen oder weiteren Abfolgen von Polyalkylenoxid -Polysiloxan- Blöcken, verzweigte Polysiloxan-Polyalkylenoxid-Copolymere, Polysiloxan-Poly-alkylenoxid-graft-Copolymere mit Polyester, (fluorierten-) (Poly-)Alkyl-, Polyacrylat-Seitenketten; Copolymere von Propylen-, Butylen- oder Styroloxid und Ethylenoxid, Blockcopolymere von Propylenoxid und Ethylenoxid, Polyalkyenoxid-Poly(meth)acrylat-Copolymere, Polyalkyenoxid-(Poly)alkyl-Copolymere, Poly(alkylenoxid)-Poly((meth)acrylat)-Blockcopolymer, fluorierte Alkyl-esterpolyalkylenoxide und Polyalkoxylate und hochverzweigte Polyaklylenoxide, bevorzugt Polysiloxan-Polyalkylenoxid-graft-Copolymere mit Kammstruktur, oder Gemischen davon.

Im Rahmen der nachfolgenden Strukturen umfasst der Ausdruck Alkyl geradkettige und verzweigte Alkylgruppen. Geeignete kurzkettige Alkylgruppen sind z. B. geradkettige oder verzweigte $C_1$-$C_7$-Alkyl-, bevorzugt $C_1$-$C_6$-Alkyl- und besonders bevorzugt $C_1$-$C_4$-Alkylgruppen. Dazu zählen insbesondere Methyl, Ethyl, Propyl, Isopropyl, n-Butyl, 2-Butyl, sec.-Butyl, tert.-Butyl, n-Pentyl, 2-Pentyl, 2-Methylbutyl, 3-Methylbutyl, 1,2-Dimethylpropyl, 1,1-Dimethylpropyl, 2,2-Di-methylpropyl, 1-Ethylpropyl, n-Hexyl, 2-Hexyl, 2-Methylpentyl, 3-Methylpentyl, 4-Methylpentyl, 1,2-Dimethylbutyl, 1,3-Dimethylbutyl, 2,3-Dimethylbutyl, 1,1-Dimethylbutyl, 2,2-Dimethylbutyl, 3,3-Dimethylbutyl, 1,1,2-Trimethylpropyl, 1,2,2-Trimethylpropyl, 1-Ethylbutyl, 2-Ethylbutyl,
1-Ethyl- 2-methylpropyl, n-Heptyl, 2-Heptyl, 3-Heptyl, 2-Ethylpentyl, 1-Propylbutyl, etc.

Geeignete längerkettige $C_8$-$C_{32}$-Alkylgruppen sind geradkettige und verzweigte Alkyl-gruppen. Bevorzugt handelt es sich dabei um überwiegend lineare Alkylreste, wie sie auch in natürlichen oder synthetischen Fettsäuren und

Fettalkoholen sowie Oxoalkoholen vorkommen. Dazu zählen z. B. n-Octyl, n-Nonyl, n-Decyl, n-Undecyl, n-Dodecyl, n-Tridecyl, n-Tetradecyl, n-Penta-decyl, n-Hexadecyl, n-Heptadecyl, n-Octadecyl, n-Nonadecyl etc. Der Ausdruck Alkyl umfasst unsubstituierte und substituierte Alkylreste.

Die vorstehenden Ausführungen zu Alkyl gelten auch für die Alkylteile in Alkylestern.

Unter Polysiloxan-Polyalkylenoxid-graft-Copolymeren mit Kammstruktur versteht man beispielsweise Polymere der allgemeinen Formel (I):

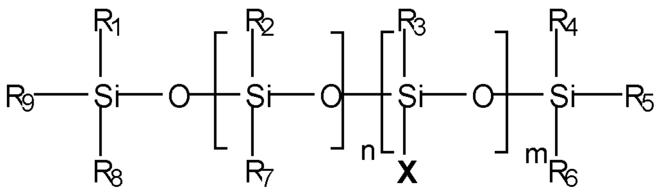

wobei

$R_1$ bis $R_9$ unabhängig voneinander H oder Alkyl oder OH oder O-Alkyl oder Allyl ($-(CH_2)-CH=CH_2$) oder O-Allyl ($-O-(CH_2)-CH=CH_2$) oder Phenyl oder Alkylester bedeuten; bevorzugt sind $R_1$ bis $R_9$ Methylreste.
n ist 0-1000 bevorzugt 0-500 besonders bevorzugt 1-100,
m ist 1-100 bevorzugt 1-50 besonders bevorzugt 1-10.

X besitzt folgende Struktur (Ia):

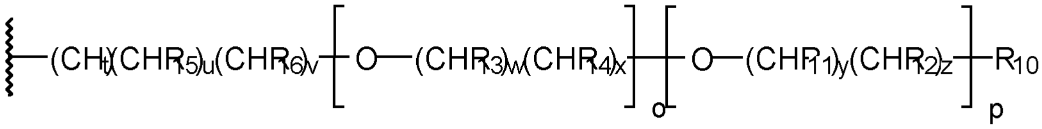

(Ia)

**$R_{10}$ kann** OH oder O-Alkyl oder O-Allyl oder O-Phenyl oder ein Alkylester sein bevorzugt ist $R_{10}$ OH, O-Methyl oder O-Butyl.
$R_{11}$, $R_{13}$ oder $R_{15}$ können unabhängig voneinander H oder Alkyl oder Phenyl bedeuten, bevorzugt sind $R_{11}$, $R_{13}$ oder $R_{13}$ H.
$R_{12}$, $R_{14}$ und $R_{16}$ können unabhängig voneinander H oder Alkyl oder Phenyl bedeuten, bevorzugt bedeuten $R_{12}$, $R_{14}$ und $R_{16}$ H oder Methyl.
o ist 0-100 bevorzugt 0-50 besonders bevorzugt 10-40,
p ist 1-100 bevorzugt 1-50 besonders bevorzugt 10-40,
t ist 0 oder 2 bevorzugt 0,
u ist 0-10 bevorzugt 0-6 besonders bevorzugt 3,
v ist 0-10 bevorzugt 0-6 besonders bevorzugt 0,
w, x, y und z können unabhängig voneinander gleich 1-10 sein, bevorzugt 1-5, besonders bevorzugt 1.

Unter Polysiloxan-Polyalkylenoxid-graft-Copolymere mit mit α-ω-Struktur versteht man beispielsweise Polymere der allgemeinen Formel (II):

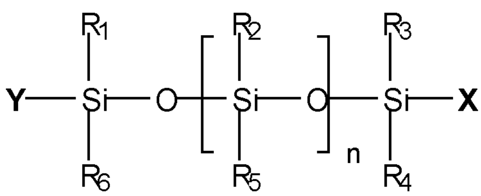

(II)

$R_1$ bis $R_6$ können unabhängig voneinander H oder Alkyl oder OH oder O-Alkyl oder Allyl (-($CH_2$)-CH=$CH_2$) oder O-Allyl (-O-($CH_2$)-CH=$CH_2$) oder Phenyl oder Alkylester sbedeuten; bevorzugt bedeuten $R_1$ bis $R_6$ Methyl.
n ist 0-1000 bevorzugt 0-500 besonders bevorzugt 1-100.
X und Y können unabhängig voneinander die folgende Struktur (Formel IIa) haben:

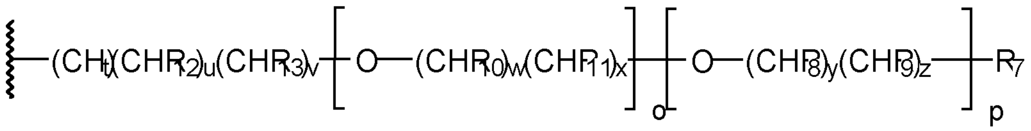

(IIa)

**$R_7$ kann** OH oder O-Alkyl oder O-Allyl (-O-($CH_2$)-CH=$CH_2$) oder O-Phenyl oder einen Alkylester bedeuten, bevorzugt ist $R_7$ OH, O-Methyl oder O-Butyl.
$R_8$, $R_{10}$ und $R_{12}$ können unabhängig voneinander H oder Alkyl oder Phenyl bedeuten, bevorzugt bedeuten $R_8$, $R_{10}$ und $R_{12}$ H.
$R_9$, $R_{11}$ und $R_{13}$ können unabhängig voneinander H oder Alkyl oder Phenyl bedeuten, bevorzugt bedeuten $R_9$, $R_{11}$ und $R_{13}$ H oder Methyl.
o ist 0-100 bevorzugt 0-50 besonders bevorzugt 10-40,
p ist 1-100 bevorzugt 1-50 besonders bevorzugt 10-40,
t ist 0 oder 2 bevorzugt 0,
u ist 0-10 bevorzugt 0-6 besonders bevorzugt 3,
v ist 0-10 bevorzugt 0-6 besonders bevorzugt 0,
w, x, y und z können unabhängig voneinander gleich 1-10 sein, bevorzugt 1-5, besonders bevorzugt 1.

Unter mit ABA oder BAB Blockstrukturen oder weiteren Abfolgen von Polyalkylenoxid Polysiloxan Blöcken versteht man beispielsweise Polymere der allgemeinen Struktur:
ABA; BAB; ABAB; BABA; ABABA; BABAB, AABB, BBAA; AABBAA, BBAABB und weitere regelmäßige Abfolgen der Wiederholungseinheiten A und B, wobei die Wiederholungseinheit A beispielsweise mit folgender allgemeiner Formel (III) beschrieben werden kann:

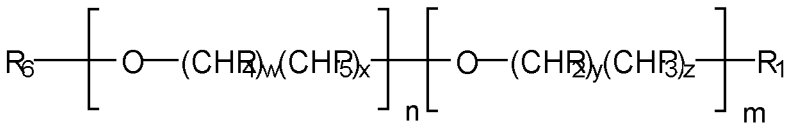

(III)

$R_1$ und $R_6$ können unabhängig voneinander Wiederholungseinheit A oder B oder H, Alkyl oder OH oder O-Alkyl oder Allyl (-($CH_2$)-CH=$CH_2$) oder O-Allyl (-O-($CH_2$)-CH=$CH_2$) oder Phenyl oder Alkylester sein.
$R_2$ und $R_4$ können unabhängig voneinander H oder Alkyl oder Phenyl bedeuten, bevorzugt bedeuten $R_2$ und $R_4$ H.
$R_{13}$ und $R_5$ können unabhängig voneinander H oder Alkyl oder Phenyl bedeuten, bevorzugt bedeuten $R_{13}$ und $R_5$ H oder Methyl.
n ist 0-100 bevorzugt 0-50,
m ist 1-100 bevorzugt 1-50,
w, x, y und z können unabhängig voneinander gleich 1-10 sein, bevorzugt 1-5, besonders bevorzugt 1.

Die Wiederholungseinheit B kann beispielsweise mit folgender allgemeiner Formel (IIIa) beschrieben werden:

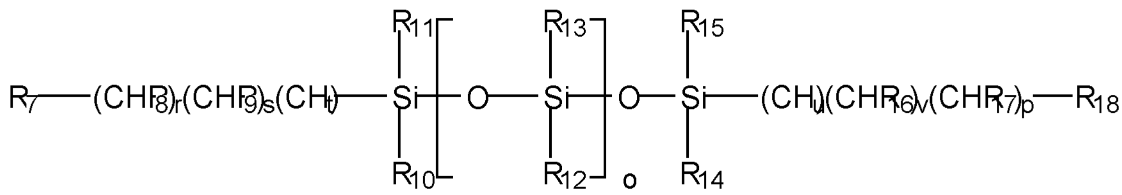

(IIIa)

$R_7$ und $R_{18}$ können unabhängig voneinander Wiederholungseinheit A oder B oder H, Alkyl oder OH oder O-Alkyl oder Allyl (-($CH_2$)-CH=$CH_2$) oder O-Allyl (-O-($CH_2$)-CH=$CH_2$), Phenyl oder einen Alkylester bedeuten.
$R_{10}$ bis $R_{15}$ können unabhängig voneinander H oder Alkyl oder OH oder O-Alkyl oder Allyl (-($CH_2$)-CH=$CH_2$) oder O-Allyl (-O-($CH_2$)-CH=$CH_2$) oder Phenyl oder einen Alkylester bedeuten; bevorzugt bedeuten $R_{10}$ bis $R_{15}$ Methyl.
$R_9$, $R_{16}$ können unabhängig voneinander H oder Alkyl oder Phenyl bedeuten, bevorzugt bedeuten $R_9$ und $R_{16}$ H.
$R_8$ und $R_{17}$ können unabhängig voneinander H oder Alkyl oder Phenyl bedeuten, bevorzugt sind $R_8$ und $R_{17}$ H oder Methyl.
o kann gleich 1-1000 sein bevorzugt 1-100,
t und u sind 0 oder 2 bevorzugt 0,
s und v sind 0-10 bevorzugt 0-6 besonders bevorzugt 3,
p und r sind 0-10 bevorzugt 0-6 besonders bevorzugt 0.

Die Wiederholungseinheit B kann auch mit folgender allgemeiner Formel (IIIb) beschrieben werden:

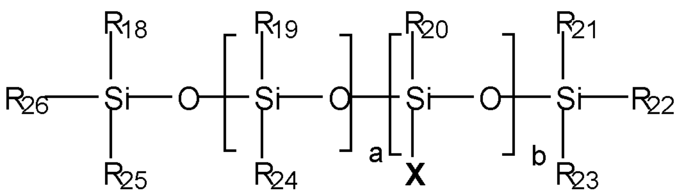

(IIIb)

$R_{22}$ und $R_{26}$ können unabhängig voneinander gleich Wiederholungseinheit A oder B oder H oder Alkyl oder OH oder O-Alkyl oder Allyl (-($CH_2$)-CH=$CH_2$) oder O-Allyl (-O-($CH_2$)-CH=$CH_2$) oder Phenyl oder Alkylester sein.
$R_{18}$ bis $R_{21}$ und $R_{23}$ bis $R_{25}$ können unabhängig voneinander H oder Alkyl oder OH oder O-Alkyl oder Allyl (-($CH_2$)-CH=$CH_2$) oder O-Allyl (-O-($CH_2$)-CH=$CH_2$) oder Phenyl oder Alkylester sein; bevorzugt sind $R_{18}$ bis $R_{21}$ und $R_{23}$ bis $R_{25}$ Methylreste.
a ist 0-1000 bevorzugt 0-500 besonders bevorzugt 1-100,
b ist 1-100 bevorzugt 1-50 besonders bevorzugt 1-10,

X hat folgende Struktur (Formel IIIc):

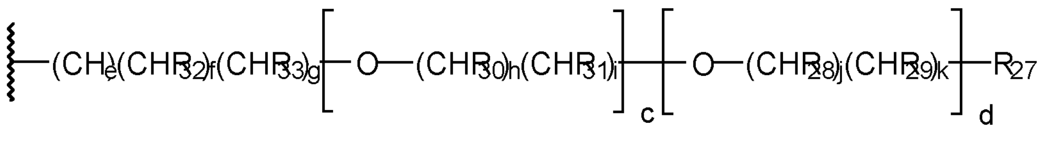

(IIIc)

**$R_{27}$ kann** OH oder O-Alkyl oder O-Allyl (-O-($CH_2$)-CH=$CH_2$) oder O-Phenyl oder ein Alkylester sein bevorzugt ist $R_1$ OH, O-Methyl oder O-Butyl.
$R_{28}$, $R_{30}$ und $R_{32}$ können unabhängig voneinander H oder Alkyl oder Phenyl bevorzugt sind $R_{28}$, $R_{30}$ und $R_{32}$ H.

$R_{29}$, $R_{31}$ und $R_{33}$ können unabhängig voneinander H oder Alkyl oder Phenyl bevorzugt sind $R_{29}$, $R_{31}$ und $R_{33}$ H oder Methylreste.
c ist 0-100 bevorzugt 0-50 besonders bevorzugt 10-40,
d ist 1-100 bevorzugt 1-50 besonders bevorzugt 10-40,
e ist 0 oder 2 bevorzugt 0,
fist 0-10 bevorzugt 0-6 besonders bevorzugt 3,
g ist 0-10 bevorzugt 0-6 besonders bevorzugt 0,
h, i, j und k können unabhängig voneinander gleich 1-10 sein, bevorzugt 1-5, besonders bevorzugt 1.

Unter verzweigten Polysiloxan-Polyalkylenoxid-graft-Copolymere versteht man beispielsweise Polymere der allgemeinen Formel (IV) oder (IVa):

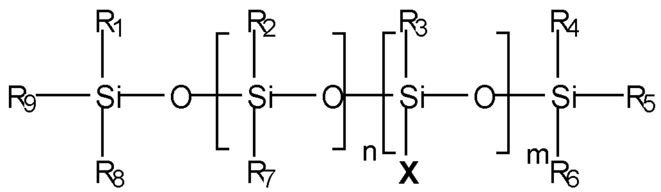

(IV) oder

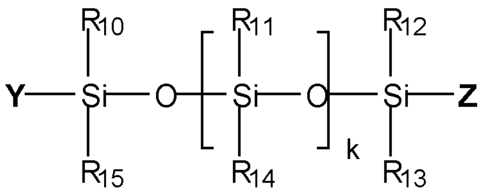

(IVa)

$R_1$ bis $R_{15}$ können unabhängig voneinander H oder Alkyl oder OH oder O-Alkyl oder Allyl (-($CH_2$)-CH=$CH_2$) oder O-Allyl (-O-($CH_2$)-CH=$CH_2$) oder Phenyl oder Alkylester sein bevorzugt sind $R_1$ bis $R_{15}$ Methylreste jedoch mindestens einer der Reste $R_1$ bis $R_{15}$ ist:

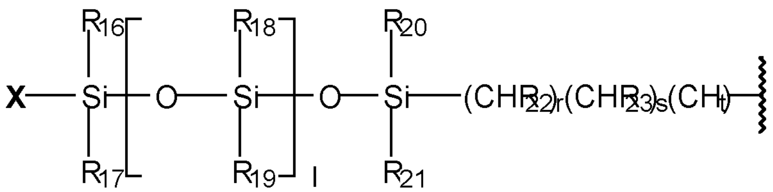

(IVb) oder

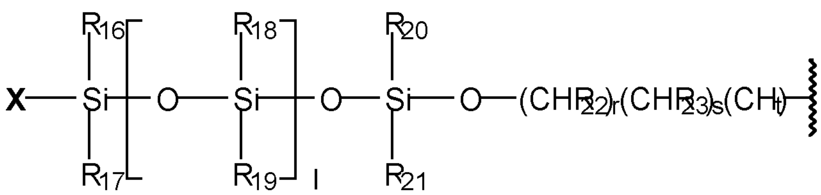

(IVc)

oder

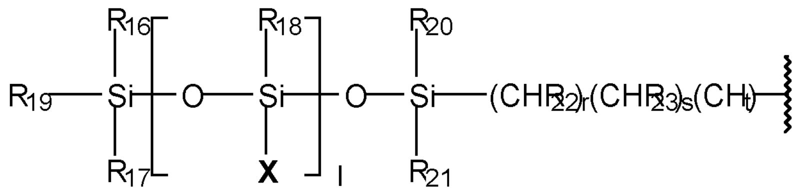

(IVd)

oder

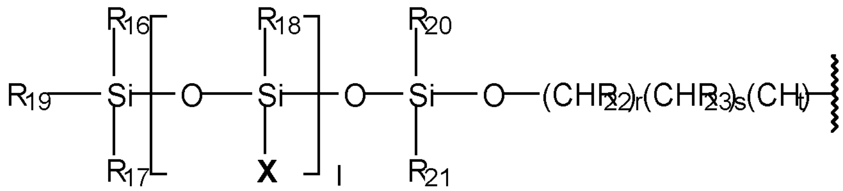

(IVe)

oder

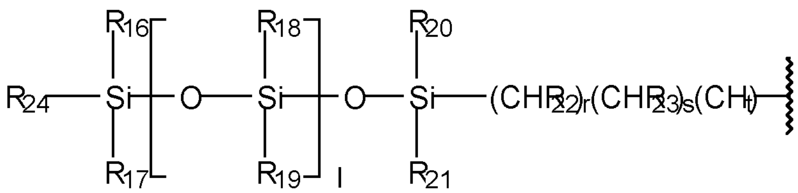

(IVf)

oder

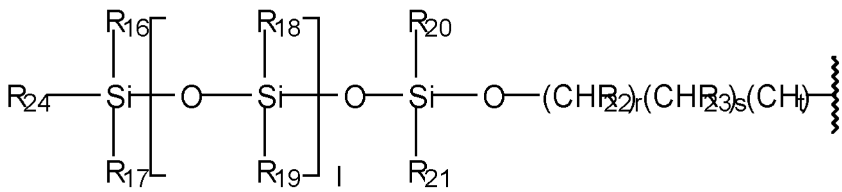

(IVg)

Wobei $R_{16}$ bis $R_{21}$ und $R_{24}$ unabhängig voneinander H oder Alkyl oder OH oder O-Alkyl oder Allyl ($-(CH_2)-CH=CH_2$) oder O-Allyl ($-O-(CH_2)-CH=CH_2$) oder Phenyl oder Alkylester sein können bevorzugt sind $R_{16}$ bis $R_{21}$ und $R_{24}$ Methylreste

$R_{23}$ können unabhängig voneinander H oder Alkyl oder Phenyl bevorzugt ist $R_{23}$ H. $R_{22}$ können unabhängig voneinander H oder Alkyl oder Phenyl bevorzugt ist $R_{22}$ H oder Methylreste.

t ist 0 oder 2 bevorzugt 0,

s ist 0-10 bevorzugt 0-6, besonders bevorzugt 3

r ist 0-10 bevorzugt 0-6, besonders bevorzug 0

l ist 1-100 bevorzugt 1-50 besonders bevorzugt 1-10.

**X**, **Y** und **Z** können unabhängig voneinander folgende Formel (IVh) besitzen:

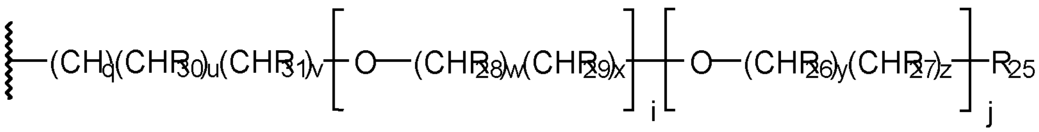

(IVh)

**Wobei $R_{25}$** OH oder O-Alkyl oder O-Allyl (-O-($CH_2$)-CH=$CH_2$) oder O-Phenyl oder ein Alkylester sein kann bevorzugt ist $R_{25}$ OH, O-Methyl oder O-Butyl.

$R_{26}$ $R_{28}$ und $R_{30}$ können unabhängig voneinander H oder Alkyl oder Phenyl bevorzugt sind $R_{26}$ $R_{28}$ und $R_{30}$ H.

$R_{27}$ $R_{29}$ und $R_{31}$ können unabhängig voneinander H oder Alkyl oder Phenyl bevorzugt sind $R_{27}$ $R_{29}$ und $R_{31}$ H oder Methylreste.

i ist 0-100 bevorzugt 0-50 besonders bevorzugt 10-40,

j ist 1-100 bevorzugt 1-50 besonders bevorzugt 10-40,

q ist 0 oder 2 bevorzugt 0,

u ist 0-10 bevorzugt 0-6 besonders bevorzugt 3,

v ist 0-10 bevorzugt 0-6 besonders bevorzugt 0,

w, x, y und z können unabhängig voneinander gleich 1-10 sein, bevorzugt 1-5, besonders bevorzugt 1.

n ist 0-1000 bevorzugt 0-500 besonders bevorzugt 1-100,

k ist 0-1000 bevorzugt 0-500 besonders bevorzugt 1-100

m ist 1-100 bevorzugt 1-50 besonders bevorzugt 1-10.

Unter Polysiloxan-Polyalkylenoxid-graft-Copolymere mit Polyester, (fluorierten-) (Poly-)Alkyl-, (fluorierten-)Polyacrylat-Seitenketten versteht man beispielsweise Polymere der allgemeinen Formel (V):

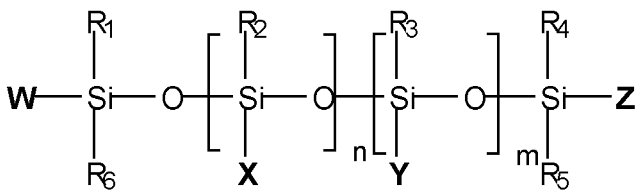

(V)

**W**, **X**, **Y** und **Z** können unabhängig voneinander

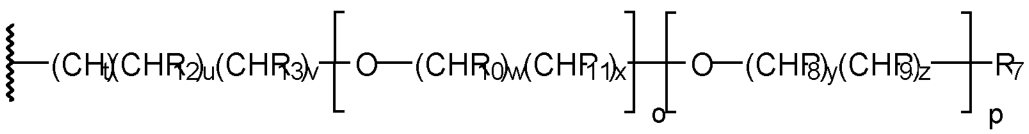

(Va)

**wobei $R_7$** OH oder O-Alkyl oder O-Allyl (-O-($CH_2$)-CH=$CH_2$) oder O-Phenyl oder ein Alkylester sein **kann** bevorzugt ist $R_7$ OH, O-Methyl oder O-Butyl;

$R_8$, $R_{10}$ und $R_{12}$ können unabhängig voneinander H oder Alkyl oder Phenyl bevorzugt sind $R_8$, $R_{10}$ und $R_{12}$ H;

$R_9$, $R_{11}$ und $R_{13}$ können unabhängig voneinander H oder Alkyl oder Phenyl bevorzugt sind $R_9$, $R_{11}$ und $R_{13}$ oder Methylreste;

o ist 0-100 bevorzugt 0-50 besonders bevorzugt 10-40;

p ist 1-100 bevorzugt 1-50 besonders bevorzugt 10-40;

t ist 0 oder 2 bevorzugt 0;

u ist 0-10 bevorzugt 0-6 besonders bevorzugt 3;

v ist 0-10 bevorzugt 0-6 besonders bevorzugt 0;
w, x, y und z können unabhängig voneinander gleich 1-10 sein, bevorzugt 1-5, besonders bevorzugt 1;

oder

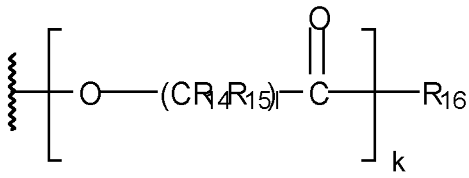

(Vb)

wobei $R_{14}$ bis $R_{16}$ unabhängig voneinander H oder Alkyl oder OH oder O-Alkyl oder Allyl ($-(CH_2)-CH=CH_2$) oder O-Allyl ($-O-(CH_2)-CH=CH_2$) sein können;
l kann gleich 1-20 sein;
k kann gleich 1-1000 sein;

oder

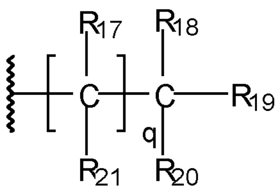

(Vc)

wobei $R_{17}$ bis $R_{21}$ unabhängig voneinander H oder F oder Alkyl oder OH oder O-Alkyl oder Allyl ($-(CH_2)-CH=CH_2$) oder O-Allyl ($-O-(CH_2)-CH=CH_2$) sein können;
q kann gleich 1-1000 sein bevorzugt 1-100 besonders bevorzugt 1-20;

oder

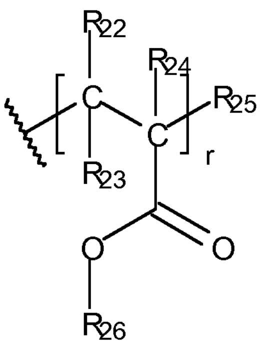

(Vd)

wobei $R_{22}$ und $R_{23}$ unabhängig voneinander gleich H oder F sein können;
wobei $R_{24}$ gleich H oder F oder Methyl sein kann;
wobei $R_{25}$ gleich H oder F oder Alkyl oder OH oder O-Alkyl oder Allyl ($-(CH_2)-CH=CH_2$) oder O-Allyl ($-O-(CH_2)-CH=CH_2$) oder (Poly)alkylenoxid ($-(CR_{27}H-CH_2-O)_s-R_{28}$ ((mit s=1-1000) sein kann, wobei $R_{27}$ und $R_{28}$ unabhängig voneinander gleich H oder Alkyl oder OH oder O-Alkyl oder Allyl ($-(CH_2)-CH=CH_2$) oder O-Allyl ($-O-(CH_2)-CH=CH_2$) bevorzugt H oder Methyl sein können,
wobei $R_{26}$ gleich H oder Alkyl oder Allyl ($-(CH_2)-CH=CH_2$) oder Poly)alkylenoxid ($-(CR_{27}H-CH_2-O-)_s-R_{28}$ ((mit

s=1-1000) sein kann, wobei $R_{27}$ und $R_{28}$ unabhängig voneinander gleich H oder Alkyl oder OH oder O-Alkyl oder Allyl (-($CH_2$)-CH=$CH_2$) oder O-Allyl (-O-($CH_2$)-CH=$CH_2$) bevorzugt H oder Methyl sein können;
r kann gleich 1-1000 sein;

oder
H oder Alkyl oder OH oder O-Alkyl oder Allyl (-($CH_2$)-CH=$CH_2$) oder O-Allyl (-O-($CH_2$)-CH=$CH_2$) sein.
$R_1$ bis $R_6$ können unabhängig voneinander gleich H oder Alkyl (-$(CH_2)_nCH_3$ (n=0-20 oder OH oder O-Alkyl oder Allyl (-($CH_2$)-CH=$CH_2$) oder O-Allyl (-O-($CH_2$)-CH=$CH_2$) oder weiter Verzweigungspunkte der Struktur

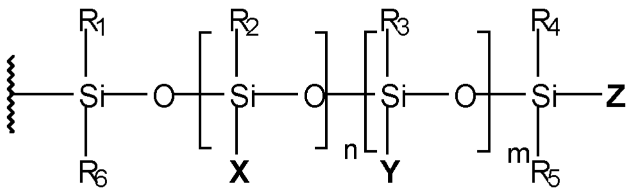

(Ve)

mit gleichen möglichen Resten wie in der Überstruktur sein.
n ist 0-1000 bevorzugt 0-500 besonders bevorzugt 1-100,
m ist 1-100 bevorzugt 1-50 besonders bevorzugt 1-10.

Unter Copolymeren von Propylen-, Butylen oder Styroloxid und Ethylenoxid versteht man beispielsweise Polymere der allgemeinen Formel (VI):

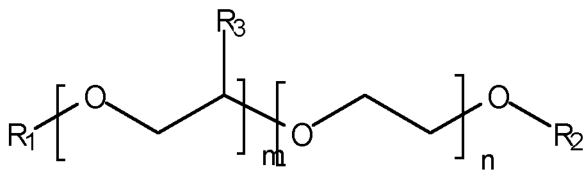

(VI)

$R_1$ kann H oder Alkyl oder Allyl (-($CH_2$)-CH=$CH_2$) oder Alkylester sein bevorzug H oder Alkyl besonders bevorzug H.
$R_2$ kann H oder Alkyl oder Allyl (-($CH_2$)-CH=$CH_2$) oder Alkylester sein bevorzug H oder Alkyl besonders bevorzug Alkyl.
$R_3$ kann H, Methyl, Ethyl oder Phenyl sein bevorzug Methyl.
n und m können unabhängig voneinander 1-1000 sein bevorzug 1-50 besonders bevorzug 1-5.

Unter Blockcopolymeren von Propylenoxid und Ethylenoxid versteht man Polymere der allgemeinen Struktur: AB; BA; ABA; BAB; ABAB; BABA; ABABA; BABAB, AABB, BBAA; AABBAA, BBAABB und weitere regelmäßige Abfolgen der Wiederholungseinheiten A und B, wobei die Wiederholungseinheit A beispielsweise mit der allgemeinen Formel (VII):

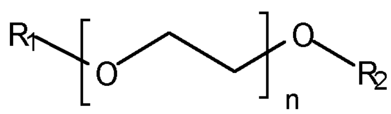

(VII)

$R_1$ und $R_2$ können unabhängig voneinander Wiederholungseinheit A oder B oder H, Alkyl oder OH oder Allyl (-($CH_2$)-CH=$CH_2$) oder Alkylester sein,
n kann gleich 0-1000 bevorzug 1-50 besonders bevorzug 1-5 sein, beschrieben wird.

Wiederholungseinheit B wird beispielsweise mit der allgemeinen Formel (VIIa):

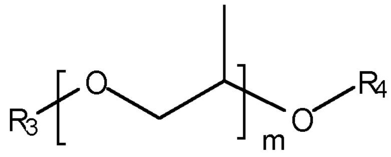

(VIIa)

$R_{13}$ und $R_4$ können unabhängig voneinander Wiederholungseinheit A oder B oder H, Alkyl oder OH oder Allyl (-($CH_2$)-CH=$CH_2$) oder Alkylester sein,
m kann gleich 0-1000 bevorzug 1-50 besonders bevorzug 1-5, sein, beschrieben.

Unter Polyalkylenoxid-Poly(meth)acrylat-Copolymere versteht man beispielsweise Polymere der allgemeinen Formel (VIII):

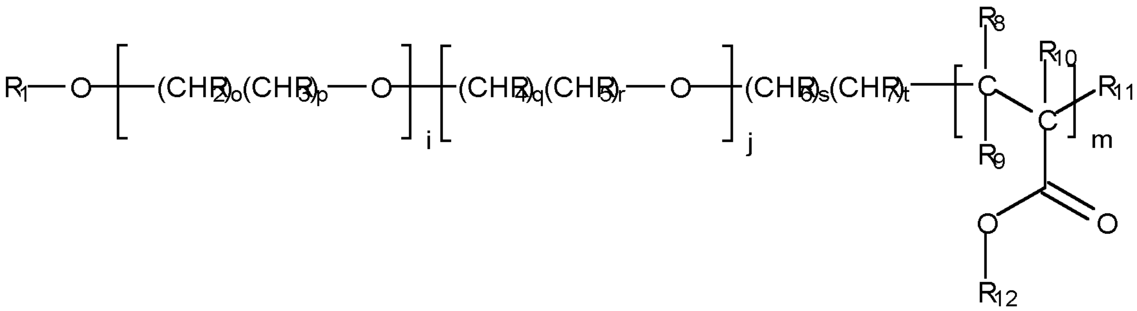

(VIII)

$R_1$ bis $R_7$ können unabhängig voneinander H oder Alkyl oder OH oder O-Alkyl oder Allyl (-($CH_2$)-CH=$CH_2$) oder O-Allyl (-O-($CH_2$)-CH=$CH_2$) oder Alkylester sein,
i und m können unabhängig voneinander 1-1000 sein,
j kann gleich 0-1000 sein,
s, und t können unabhängig voneinander 0-10 sein, bevorzugt 0-6,
o, p, q, und r können unabhängig voneinander 1-10 sein, bevorzugt 1-5, besonders bevorzugt 1,
$R_8$ und $R_9$ können unabhängig voneinander H oder F sein,
$R_{10}$ kann H oder F oder Methyl sein kann,
$R_{11}$ kann H oder F oder Alkyl oder OH oder O-Alkyl oder Allyl (-($CH_2$)-CH=$CH_2$) oder O-Allyl (-O-($CH_2$)-CH=$CH_2$) oder (Poly)alkylenoxid (-($CR_{13}$H-$CH_2$-O-)$_n$-$R_{14}$ ((mit n=1-1000) sein, wobei $R_{13}$ und $R_{14}$ unabhängig voneinander H oder Alkyl, oder O-Alkyl oder Allyl (-($CH_2$)-CH=$CH_2$) oder O-Allyl (-O-($CH_2$)-CH=$CH_2$) bevorzugt H, Methyl oder Ethyl oder OH sein können,
$R_{12}$ kann H oder Alkyl oder verzweigtes Alkyl (C4-C20) oder Allyl (-($CH_2$)-CH=$CH_2$) oder (Poly)alkylenoxid (-($CR_{13}$H-$CH_2$-O-)$_n$-$R_{14}$ ((mit n=1-1000) sein, wobei $R_{13}$ und $R_{14}$ unabhängig voneinander H oder Alkyl, oder O-Alkyl oder Allyl (-($CH_2$)-CH=$CH_2$) oder O-Allyl (-O-($CH_2$)-CH=$CH_2$) bevorzugt H, Methyl oder Ethyl oder OH sein können.

Unter Poly(alkylenoxid)-Poly((meth)acrylat)-Blockcopolymer versteht man beispielsweise Polymere der allgemeinen Struktur:
ABA; BAB; ABAB; BABA; ABABA; BABAB, AABB, BBAA; AABBAA, BBAABB und weitere regelmäßige Abfolgen der Wiederholungseinheiten A und B, wobei die Wiederholungseinheit A beispielsweise mit der allgemeinen Formel (IX)

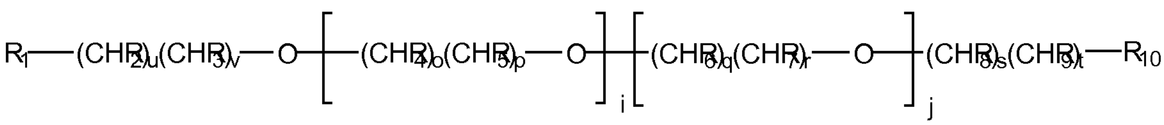

(IX)

wobei $R_1$ bis $R_{10}$ unabhängig voneinander Wiederholungseinheit A oder B oder H oder Alkyl oder OH oder O-Alkyl oder Allyl (-($CH_2$)-CH=$CH_2$) oder O-Allyl (-O-($CH_2$)-CH=$CH_2$) sein kann,
i und j können unabhängig voneinander gleich 0-1000 sein,
s, t, u und v können unabhängig voneinander gleich 0-10 sein bevorzugt 0-6, o, p, q, und r können unabhängig voneinander gleich 1-10 sein bevorzugt 1-5 besonders bevorzugt 1.

Wiederholungseinheit B wird beispielsweise mit der allgemeinen Formel (IXa):

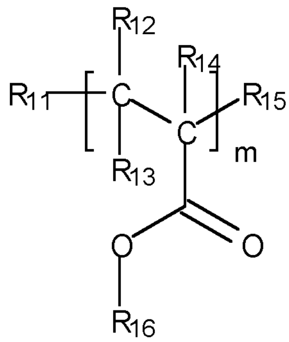

(IXa)

bezeichnet, wobei $R_{12}$ und $R_{13}$ unabhängig voneinander glich H oder F sein können, $R_{14}$ kann gleich H oder F oder Methyl sein,
$R_{11}$ und $R_{15}$ können Wiederholungseinheit A oder B oder H oder F oder Alkyl oder OH oder O-Alkyl oder Allyl (-($CH_2$)-CH=$CH_2$) oder O-Allyl (-O-($CH_2$)-CH=$CH_2$) sein,
$R_{16}$ kann gleich H oder Alkyl oder Allyl (-($CH_2$)-CH=$CH_2$) oder (Poly)alkylenoxid (-($CR_{17}$H-$CH_{2}$-O-)$_n$-$R_{18}$ ((mit n=1-1000) sein, wobei $R_{17}$ und $R_{18}$ unabhängig voneinander gleich H oder Alkyl, oder O-Alkyl oder Allyl (-($CH_2$)-CH=$CH_2$) oder O-Allyl (-O-($CH_2$)-CH=$CH_2$) bevorzugt Methyl oder Ethyl oder OH sein können,
m kann gleich 1-1000 sein.

Unter Polyalkylenoxid-(Poly)alkyl-Copolymeren versteht man beispielsweise Polymere der allgemeinen Formel (X):

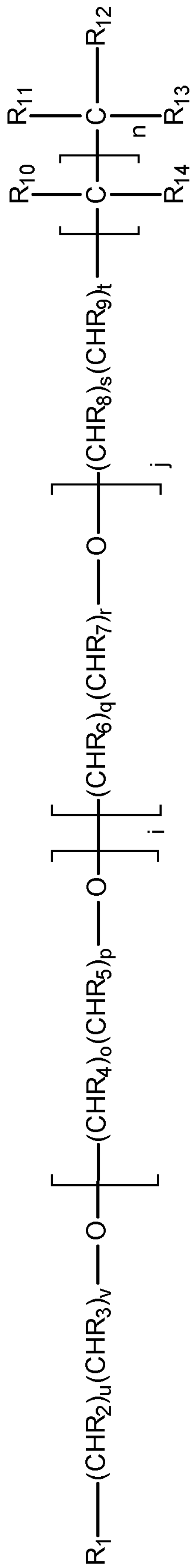

(X)

$R_1$ bis $R_9$ können unabhängig voneinander H oder Alkyl oder OH oder O-Alkyl oder Allyl (-($CH_2$)-CH=$CH_2$) oder O-Allyl (-O-($CH_2$)-CH=$CH_2$) oder Alkylester sein,
i und n können unabhängig voneinander 1-1000 sein,
j kann 0-1000 sein,
s, t, u und v können unabhängig voneinander 0-10 sein, bevorzugt 0-6,
o, p, q, und r können unabhängig voneinander 1-10 sein, bevorzugt 1-5, besonders bevorzugt 1.
$R_{10}$ bis $R_{14}$ können unabhängig voneinander H oder F oder Alkyl oder OH oder O-Alkyl oder Allyl (-($CH_2$)-CH=$CH_2$) oder O-Allyl (-O-($CH_2$)-CH=$CH_2$) sein.

Unter (fluorierten-)Alkylester-Polyalkylenoxid-Copolymeren versteht man beispielsweise Polymere der allgemeinen Formel (XI):

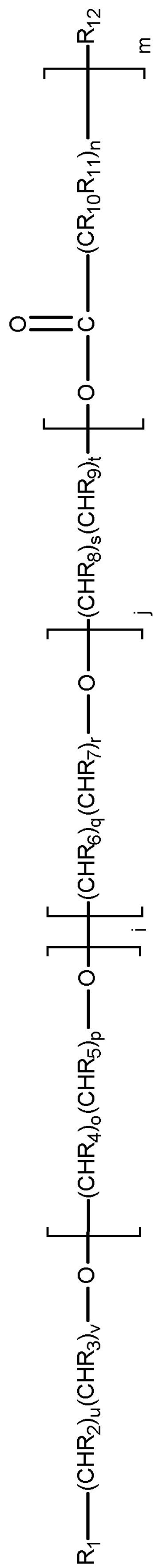

(XI)

$R_1$ bis $R_9$ können unabhängig voneinander H oder Alkyl oder OH oder O-Alkyl oder Allyl ($-(CH_2)-CH=CH_2$) oder O-Allyl ($-O-(CH_2)-CH=CH_2$) oder Alkylester sein,
i kann gleich 1-1000 sein,
j kann gleich 0-1000 sein,
s, t, u und v können unabhängig voneinander 0-20 sein, bevorzugt 0-12,
o, p, q, und r können unabhängig voneinander 1-10 sein, bevorzugt 1-5, besonders bevorzugt 1.
$R_{10}$ bis $R_{12}$ können unabhängig voneinander H oder F oder Alkyl oder OH oder O-Alkyl oder Allyl ($-(CH_2)-CH=CH_2$) oder O-Allyl ($-O-(CH_2)-CH=CH_2$) sein,
n kann 1-20 sein,
m kann 1-1000 sein.

Unter hochverzweigten Polyalkylenoxiden versteht man beispielsweise Polymere wie sie in EP 1141 083, in DE 102 11 664, in WO 00/56802, in WO 03/062306, in WO 96/19537, in WO 03/54204, in WO 03/93343, in WO 05/037893, in WO 04/020503, in DE 10 2004 026 904, in WO 99/16810, in WO 05/026234 und DE 10 2005 009 166 beschrieben werden.

Die Quellsaat enthält 60 bis 99,9 Gew.-%, bevorzugt 60 bis 80 Gew.-%, mindestens eines nicht-ionisch ethylenisch ungesättigten Monomers und 0,1 bis 40 Gew.-%, bevorzugt 20 bis 40 Gew.-% eines ethylenisch ungesättigten hydrophilen Monomers.

Die mittlere Teilchengröße im ungequollenen Zustand des Kernstufenpolymers, enthaltend Saat und Quellsaat, beträgt 50 bis 300 nm, bevorzugt 50 bis 200 nm.

Unter den nicht-ionischen ethylenisch ungesättigten Monomeren der Quellsaaat versteht man beispielsweise Styrol, Vinyltoluol, Ethylen, Butadien, Vinylacetat, Vinylchlorid, Vinylidenchlorid, Acrylnitril, Acrylamid, Methacrylamid, ($C_1$-$C_{20}$)Alkyl- oder ($C_3$-$C_{20}$)Alkenylester der Acryl- oder Methacrylsäure, Methacrylat, Methylmethacrylat, Ethylacrylat, Ethylmethacrylat, Butylacrylat, Butylmethacrylat, 2-Ethylhexylacrylat, 2-Ethylhexylmethacrylat, Benzylacrylat, Benzylmethacrylat, Laurylacrylat, Laurylmethacrylat, Oleylacrylat, Oleylmethacrylat, Palmitylacrylat, Palmitylmethacrylat, Stearylacrylat, Stearylmethacrylat, Hydroxylgruppen enthaltende Monomere, insbesondere $C_1$-$C_{10}$-Hydroxyalkyl(meth)acrylate, wie Hydroxyethyl(meth)acrylat, Hydroxypropyl(meth)acrylat, Glycidyl(meth)acrylat, bevorzugt Methylmethacrylat.

Unter den ethylenisch ungesättigten hydrophilen Monomeren der Quellsaat versteht man beispielsweise Acrylsäure, Methacrylsäure, Acryloxypropionsäure, Methacryloxypropionsäure, Acryloxyessigsäure, Methacryloxyessigsäure, Crotonsäure, Aconitsäure, Itakonsäure, Monomethylmaleat, Maleinsäure, Monomethylitakonat, Maleinsäureanhydrid, Fumarsäure, Monomethylfumarat, Itakonsäureanhydrid, sowie die Leinölfettsäuren Ölsäure, Linolsäure und Linolensäure sowie die weiteren Fettsäuren Rizinolsäure, Palmitoleinsäure, Elaidinsäure, Vaccensäure, Icosensäure, Cetoleinsäure, Erucasäure, Nervonsäure, Arachidonsäure, Timnodonsäure, Clupanodonsäure, bevorzugt Acrylsäure und Methacrylsäure.

Das Hüllstufenpolymer enthält mindestens 50 Gew.-% eines nicht-ionischen ethylenisch ungesättigten Monomers.

Unter den nicht-ionischen ethylenisch ungesättigten Monomeren des Hüllstufenpolymers versteht man beispielsweise Styrol, Ethylvinylbenzol, Vinyltoluol, Ethylen, Butadien, Vinylacetat, Vinylchlorid, Vinylidenchlorid, Acrylnitril, Acrylamid, Methacrylamid, ($C_1$-$C_{20}$)Alkyl- oder ($C_3$-$C_{20}$)Alkenylester der Acryl- oder Methacrylsäure, Methacrylat, Methylmethacrylat, Ethylacrylat, Ethylmethacrylat, Butylacrylat, Butylmethacrylat, 2-Ethylhexylacrylat, 2-Ethylhexylmethacrylat, Benzylacrylat, Benzylmethyacrylat, Laurylacrylat, Laurylmethacrylat, Oleylacrylat, Oleylmethacrylat, Palmitylacrylat, Palmitylmethacrylat, Stearylacrylat, Stearylmethacrylat, Hydroxylgruppen enthaltende Monomere, insbesondere $C_1$-$C_{10}$-Hydroxyalkyl(meth)acrylate, wie Hydroxyethyl(meth)acrylat, Hydroxypropyl(meth)acrylat, Glycidyl(meth)acrylat, bevorzugt Styrol, Acrylnitril, Methacrylamid, Methacrylat, Methylmethacrylat, Ethylacrylat, Ethylmethacrylat, Butylacrylat, Butylmethacrylat, 2-Ethylhexylacrylat, 2-Ethylhexylmethacrylat.

Das Hüllstufenpolymer umschließt das Kernstufenpolymer und besitzt im protonierten Zustand eine Glasübergangstemperatur, bestimmt nach der Fox-Gleichung, zwischen -60°C und 120°C.

Die Teilchengröße des Kern-Schalepolymers, bestehend aus Kernstufen- und Hüllstufenpolymer im ungequollenen Zustand, beträgt 60 nm bis 1000 nm, bevorzugt 60 bis 500 nm.

Wird in wässriger Lösung oder Verdünnung polymerisiert, so können die Monomere vor oder während der Polymerisation ganz oder teilweise durch Basen neutralisiert werden. Als Basen können beispielsweise Alkali- oder Erdalkaliverbindungen wie Natriumhydroxid, Kaliumhydroxid, Calciumhydroxid, Magnesiumoxid, Natriumcarbonat; Ammoniak; primäre, sekundäre und tertiäre Amine, wie Ethylamin, Propylamin, Monoisopropylamin, Monobutylamin, Hexylamin, Ethanolamin, Dimethylamin, Diethylamin, Di-n-propylamin, Tributylamin, Triethanolamin, Dimethoxyethylamin, 2- Ethoxyethylamin, 3-Ethoxypropylamin, Dimethylethanolamin, Diisopropanolamin, Morpholin, Ethylendiamin, 2-Diethylaminethylamin, 2,3-Diaminopropan, 1,2-Propylendiamin, Dimethylaminopropylamin, Neopentandiamin, Hexamethylendiamin, 4,9-Dioxadodecan-1,12-diamin, Polyethylenimin , Polyvinylamin oder Mischungen der aufgeführten eingesetzt werden.

Bevorzugt werden die ethylenisch ungesättigten hydrophilen Monomere, die in (i) verwendet werden, vor oder während der Polymerisation nicht neutralisiert.

Die unter (ii) aufgeführte Neutralisation erfolgt mit einer oder mehrerer der genannten Basen zur Quellung des Kerns und nachfolgend der Bildung des organischen Hohlteilchens. Vorzugsweise werden zur unter (ii) aufgeführten Neutralisation Natriumhydroxid, Ammoniak, Triethanolamin und Diethanolamin eingesetzt.

Wird die unter (ii) aufgeführte Neutralisation bis zu einem pH-Wert von mindestens 7,5, der$_{[DK6]}$ gebildeten Partikel mit einer Base, in Anwesenheit von mindestens 0,5 Gew.-% eines nicht-ionischen ethylenisch ungesättigten Weichmachermonomers, bezogen auf das Gesamtgewicht des Kernschalepolymers, durchgeführt, kann sie unter den folgenden Bedingungen erfolgen:

(a) es findet keine Homopolymerisation des Weichmachermonomers statt
(b) in Anwesenheit eines Weichmachermonomers mit einer Ceiling Temperatur kleiner 181°C, bevorzugt kleiner 95°C,
(c) nachdem man die Polymerisation durch Zugabe eines Inhibitors oder Reduktionsmittels gestoppt hat, oder
(d) wenn die Gesamtmenge des Initiators nur bis zu 0,5 Gew.-%, des Hüllstufenpolymers beträgt und entweder vor Start der Zugabe der Monomeren des Hüllstufenpolymers zugegeben wird oder nur während der ersten 50% der Zugabe das Monomer des Hüllstufenpolymers zugegeben wird.$_{[DK7]}$

Die unter ii) aufgeführte Neutralisation kann auch unter Bedingungen, bei denen eine substantielle Polymerisation stattfindet, erfolgen$_{[IB8][IB9]}$.

Unter Homopolymerisation versteht man die Polymerisation nur eines Monomers zu einem Polymer, welches nur eine Wiederholungseinheit enthält, mit einer Polymerisationsgeschwindigkeit, die unter Bedingungen der freien radikalischen Emulsionspolymerisation mindestens 10% oder mehr der Polymerisationsgeschwindigkeit von Styrol unter diesen Bedingungen entspricht.

Unter den nicht-ionischen ethylenisch ungesättigten Weichmachermonomeren, die unter Bedingungen, bei denen noch ein wesentlicher Radikalfluss nachzuweisen ist, keine Homopolymerisation aufweisen, versteht man beispielsweise Maleinsäureanhydrid, Stilben oder α-Methylstyrol.

Unter den nicht-ionischen ethylenisch ungesättigten Weichmachermonomeren mit einer Ceiling Temperatur kleiner 181°C, bevorzugt kleiner 95°C, versteht man beispielsweise α- Methylstyrol, Ester der 2-Phenylacrylsäure / Atropasäure (z.B. Methyl, Ethyl, n-Propyl, n-Butyl), 2-Methyl-2-buten, 2,3-Dimethyl-2-buten, 1,1-Diphenylethen oder Methyl-2-tert-butylacrylat sowie weitere in J. Brandrup, E.H. Immergut, Polymer Handbook 3rd Edition, II/316ff aufgeführte Monomere.

Zur Sicherstellung, dass kein wesentlicher Radikalfluss unter dem die Weichmachermonomere polymerisieren können vorliegt, gibt es verschiedene Mittel, wie die Zugabe eines oder mehrerer Polymerisationsinhibitoren, die Zugabe eines oder mehrerer Reduktionsmittel, das Warten für einen ausreichenden Zeitraum, bis keine nennenswerte Anzahl an freien Radikalen mehr vorhanden ist, aufgrund dessen Abbruch erfolgt, das Abkühlen des Inhalts des Reaktors um die Reaktivität der freien Radikale sowie die Bildung neuer Radikale durch thermischen Zerfall einzuschränken, sowie Kombinationen hiervon.

Ein bevorzugtes Mittel schließt die Zugabe eines oder mehrerer Polymerisationsinhibitoren wie beispielsweise N,N-Diethylhydroxylamin, N-Nitrosodiphenylamin, 2,4-Dinitrophenylhydrazin, p-Phenylendiamin, Phenathiazin, Allocimen, Triethylphosphit, 4-Nitrosophenol, 2-Nitrophenol, p-Aminophenol, 4-Hydroxy-TEMPO (auch bekannt als 4-Hydroxy-2,2,6,6-tetrame-thylpiperidinyloxy, freies Radikal), Hydrochinon, p-Methoxyhydrochinon, tert-Butyl-p-hydrochinon, 2,5-Di-tert-butyl-p-hydrochinon, 1,4-Naphthalindiol, 4-tert-Buty-1-catechol, Kupfersulfat, Kupfernitrat, Kresol und Phenol ein.

Typische Reduktionsmittel sind reduzierend wirkenden Schwefelverbindungen, beispielsweise Bisulfite, Sulfite, Sulfinate, Thiosulfate, Dithionite und Tetrathionate von Alkalimetallen und Ammoniumverbindungen und deren Adukte wie Natriumhydroxymethylsulfinate und Acetonbisulfite sowie reduzierend wirkende Polyhydroxy-Verbindungen wie Kohlenhydrate und deren Derivate wie beispielsweise Ascorbinsäure, Isoascorbinsäure und deren Salze (z.B. Natrium-Erythorbat).

Wenn verwendet, werden die Polymerisationsinhibitoren oder Reduktionsmittel in einer wirksamen Menge zugegeben, die im Wesentlichen jede Polymerisation stoppt, im allgemeinen 25 bis 5.000 Teile pro Million ("ppm"), vorzugsweise 50 bis 3.500 ppm, basierend auf den Polymerfeststoffen. Bevorzugt werden die Polymerisationsinhibitor(en) oder Reduktionsmittel zugegeben, während sich das Mehrstufen-Polymer bei oder unter der Temperatur befindet, bei der das Hüllstufenpolymer polymerisiert wurde.

Wird (ii) in Anwesenheit eines Weichmachermonomers durchgeführt, so versteht man unter dem Weichmachermonomer beispielsweise Styrol, α-Methylstyrol, Vinyltoluol, Ethylen, Butadien, Vinylacetat, Vinylchlorid, Vinylidenchlorid, Acrylnitril, Acrylamid, Methacrylamid, ($C_1$-$C_{20}$)Alkyl- oder ($C_3$-$C_{20}$)Alkenylester der Acryl- oder Methacrylsäure,

Methacrylat, Methylmethacrylat, Ethylacrylat, Ethylmethacrylat, Butylacrylat, Butylmethacrylat, 2-Ethylhexylacrylat, 2-Ethylhexylmethacrylat, Benzylacrylat, Benzylmethacrylat, Laurylacrylat, Laurylmethacrylat, Oleylacrylat, Oleylmethacrylat, Palmitylacrylat, Palmitylmethacrylat, Stearylacrylat, Stearylmethacrylat, Ester der 2-Phenylacrylsäure / Atropasäure (z.B. Methyl, Ethyl, n-Propyl, n-Butyl), 2-Methyl-2-buten, 2,3-Dimethyl-2-buten, 1,1-Diphenylethen, 1,2-Diphenylethen, Methyl-2-tert-butylacrylat oder Maleinsäureanhydrid. Bevorzugt wird als Weichmachermonomer Styrol oder $\alpha$-Methylstyrol eingesetzt.

Die Polymerisation des nicht-ionischen ethylenisch ungesättigten Weichmachermonomers (iii) kann mit oder ohne Zugabe weiterer nicht-ionischer ethylenisch ungesättigter Monomere nach der Zugabe der Base erfolgen.

Weitere Schalen enthalten ebenfalls mindestens ein nicht-ionisches ethylenisch ungesättigtes Monomer.

Unter den nicht-ionischen ethylenisch ungesättigten Monomeren versteht man beispielsweise Styrol, Ethylvinylbenzol, Vinyltoluol, Ethylen, Butadien, Vinylacetat, Vinylchlorid, Vinylidenchlorid, Acrylnitril, Acrylamid, Methacrylamid, ($C_1$-$C_{20}$)Alkyl- oder ($C_3$-$C_{20}$)Alkenylester der Acryl- oder Methacrylsäure, Methacrylat, Methylmethacrylat, Ethylacrylat, Ethylmethacrylat, Butylacrylat, Butylmethacrylat, 2-Ethylhexylacrylat, 2-Ethylhexylmethacrylat, Benzylacrylat, Bezylmethylacrylat, Laurylacrylat, Laurylmethacrylat, Oleylacrylat, Oleylmethacrylat, Palmitylacrylat, Palmitylmethacrylat, Stearylacrylat, Stearylmethacrylat, Hydroxylgruppen enthaltende Monomere, insbesondere $C_1$-$C_{10}$-Hydroxyaklkyl(meth)acrylate, wie Hydroxyethyl(meth)acrylat, Hydroxypropyl(meth)acrylat, Glycidyl(meth)acrylat, bevorzugt Styrol, Acrylnitril, Methacrylamid, Methacrylat, Methylmethacrylat, Ethylacrylat, Ethylmethacrylat, Butylacrylat, Butylmethacrylat, 2-Ethylhexylacrylat, 2-Ethylhexylmethacrylat.

Werden die erfindungsgemäß erhältlichen Polymerisate für den Anstrich verwendet, sollte die mittlere Endteilchengröße 100 bis 600 nm betragen, für die Anwendung im Papier und in der Kosmetik 200 bis 2500 nm und für Schäume 300 bis 800 nm.

Im Anstrich können üblicherweise eingesetzte Pigmente, speziell $TiO_2$, vollständig oder teilweise durch die hier beschriebene Polymerdispersion ersetzt werden. Typischerweise enthalten solche Anstrichmittel u.a. Wasser, Verdickungsmittel, Base, Pigmentverteiler, Assoziativverdicker, Entschäumer, Biozid, Bindemittel, sowie Filmbildehilfsmittel.

Die Hohlteilchendispersion kann auch für ähnliche Anwendungen in anderen Beschichtungen bestehend aus harzartigen Kondensationsprodukten, wie Phenolate und Aminoplaste, beispielsweise Harnstoffformaldehyd und Melaminformaldehyd verwendet werden. Ebenso ist die Verwendung in weiteren Beschichtungen basierend auf wasserdispergierbaren Alkyden, Polyurethanen, Polyestern, Ethylvinylacetaten sowie Styrolbutadien möglich.

Der Einsatz der nach dem erfindungsgemäßen Verfahren erhältlichen organischen Pigmente in Papierbeschichtungen führt zu einer Erhöhung des Papierglanzes. Das lässt sich auf die, anders als bei anorganischen Pigmenten, unter Druck verformbare Hülle zurückführen. Auch die Papierdruckqualität wird gesteigert. Der Austausch von anorganischen Pigmenten gegen die hier beschriebenen organischen Pigmente führt zu einer Erniedrigung der Dichte der Beschichtung und somit zu leichterem Papier.

In Kosmetika können die nach dem erfindungsgemäßen Verfahren erhältlichen organischen Pigmente beispielsweise in Sonnenschutzcremes zur Verstärkung des Lichtschutzes eingesetzt werden. Durch die außergewöhnlichen Lichtstreueigenschaften wird die Wahrscheinlichkeit der Absorbierung von UV-Strahlung durch UV-aktive Substanzen in der Sonnencreme erhöht.

Die nach dem erfindungsgemäßen Verfahren erhältlichen organischen Pigmente können weiterhin in Schäumen, Pflanzenschutzmitteln, thermoplastischen Formmassen und Tinten eingesetzt werden.

Die Polymerisate können nach üblichen Polymerisationsverfahren der Emulsionspolymerisation hergestellt werden. Es wird bevorzugt unter Ausschluss von Sauerstoff gearbeitet, vorzugsweise in einem Stickstoffstrom. Für die Polymerisationsmethode werden die üblichen Apparaturen verwendet, z.B. Rührkessel, Rührkesselkaskaden, Autoklaven, Rohrreaktoren und Kneter. Die Polymerisation kann in Lösungs- oder Verdünnungsmitteln, wie z.B. Toluol, *o*-Xylol, *p*-Xylol, Cumol, Chlorbenzol, Ethylbenzol, technischen Mischungen von Alkylaromaten, Cyclohexan, technischen Aliphatenmischungen, Aceton, Cyclohexanon, Tetrahydrofuran, Dioxan, Glykolen und Glykolderivaten, Polyalkylenglykolen und deren Derivate, Diethylether, *tert.*-Butylmethyl-ether, Essigsäuremethylester, Isopropanol, Ethanol, Wasser oder Mischungen wie z.B. Iso-propanol/Wasser-Mischungen ausgeführt werden.

Die Polymerisation kann bei Temperaturen von 20 bis 300, vorzugsweise von 50 bis 200°C durchgeführt werden.

Die Polymerisation wird vorzugsweise in Gegenwart von Radikale bildenden Verbindungen durchgeführt. Man benötigt von diesen Verbindungen bis zu 30, vorzugsweise 0,05 bis 15, besonders bevorzugt $0,1_{[DK10]}$ bis 5 Gew.-%, bezogen auf die bei der Polymerisation eingesetzten Monomeren. Bei mehrkomponentigen Initiatorsystemen (z.B. RedOx-Initiatorsystemen) beziehen sich die vorstehenden Gewichtsangaben auf die Summe der Komponenten.

Geeignete Polymerisationsinitiatoren sind beispielsweise Peroxide, Hydroperoxide, Peroxodisulfate, Percarbonate, Peroxiester, Wasserstoffperoxid und Azoverbindungen. Beispiele für Initiatoren, die wasserlöslich oder auch wasserunlöslich sein können, sind Wasserstoffperoxid, Dibenzoylperoxid, Dicyclohexylperoxidicarbonat, Dilauroylperoxid, Methylethylketonperoxid, Di-*tert.*-Butylperoxid, Acetylacetonperoxid, *tert.*-Butylhydroperoxid, Cumolhydroperoxid, *tert.*-Butylperneodecanoat, *tert.*-Amylperpivalat, *tert.*-Butylperpivalat, *tert.*-Butylperneohexanoat, *tert*-Butylper-2-ethylhexanoat, *tert*-Butyl-perbenzoat, Lithium-, Natrium-, Kalium- und Ammoniumperoxodisulfat, Azodiisobutyronitril, 2,2'

-Azobis(2-amidinopropan)dihydrochlorid, 2-(Carbamoylazo)isobutyronitril und 4,4-Azobis(4-cyanovaleriansäure).

Die Initiatoren können allein oder in Mischung untereinander angewendet werden, z.B. Mischungen aus Wasserstoffperoxid und Natriumperoxodisulfat. Für die Polymerisation in wässrigem Medium werden bevorzugt wasserlösliche Initiatoren eingesetzt.

Auch die bekannten RedOx-Initiatorsysteme können als Polymerisationsinitiatoren verwendet werden. Solche RedOx-Initiatorsysteme enthalten mindestens eine peroxidhaltige Verbindung in Kombination mit einem RedOx-Coinitiator z.B. reduzierend wirkenden Schwefelverbindungen, beispielsweise Bisulfite, Sulfite, Sulfinate, Thiosulfate, Dithionite und Tetrathionate von Alkalimetallen und Ammoniumverbindungen und deren Adukte wie Natriumhydroxymethylsulfinate und Acetonbisulfite sowie Ascorbinsäure, Isoascorbinsäure und Natrium Erythorbat. So kann man Kombinationen von Peroxodisulfaten mit Alkalimetall- oder Ammoniumhydrogensulfiten einsetzen, z.B. Ammoniumperoxodisulfat und Ammoniumdisulfit. Die Menge der peroxidhaltigen Verbindung zum RedOx-Coinitiator beträgt 30:1 bis 0,05:1.

In Kombination mit den Initiatoren bzw. den RedOx-Initiatorsystemen können zusätzlich Übergangsmetallkatalysatoren eingesetzt werden, z.B. Salze von Eisen, Kobalt, Nickel, Kupfer, Vanadium und Mangan. Geeignete Salze sind z.B. Eisen-II-sulfat, Kobalt-II-chlorid, Nickel-II-sulfat, Kupfer-I-chlorid oder auch wasserlösliche Eisen-Chelatkomplexe wie K[Fe-III-EDTA] oder Na[Fe-III-EDTA]$_{[DK11]}$. Bezogen auf die zu polymerisierenden Monomeren oder auf die zu polymerisierenden Monomeren einer Stufe wird das reduzierend wirkende Übergangsmetallsalz in einer Konzentration von 0,1 ppm bis 1 000 ppm eingesetzt. So kann man Kombinationen von Wasserstoffperoxid mit Eisen-II-Salzen einsetzen, wie beispielsweise 0,5 bis 30 % Wasserstoffperoxid und 0,1 bis 500 ppm Mohrsches Salz.

Auch bei der Polymerisation in organischen Lösungsmitteln können in Kombination mit den obengenannten Initiatoren RedOx-Coinitiatoren und/oder Übergangsmetallkatalysatoren mitverwendet werden, z.B. Benzoin, Dimethylanilin, Ascorbinsäure sowie organisch lösliche Komplexe von Schwermetallen, wie Kupfer, Cobalt, Eisen, Mangan, Nickel und Chrom. Die üblicherweise verwendeten Mengen an RedOx-Coinitiatoren bzw. Übergangsmetallkatalysatoren betragen hier üblicherweise etwa 0,1 bis 1 000 ppm, bezogen auf die eingesetzten Mengen an Monomeren.

Falls die Reaktionsmischung an der unteren Grenze des für die Polymerisation in Betracht kommenden Temperaturbereiches anpolymerisiert und anschließend bei einer höheren Temperatur auspolymerisiert wird, ist es zweckmäßig, mindestens zwei verschiedene Initiatoren oder Initiatorsysteme zu verwenden, die bei unterschiedlichen Temperaturen zerfallen, so dass in jedem Temperaturintervall eine ausreichende Konzentration an Radikalen zur Verfügung steht oder ein RedOx-Initiatorsystem zu verwenden, bei dem die peroxidhaltige Komponente bei niedriger Temperatur zunächst durch einen Coinitiator aktiviert wird und bei einer höheren Temperatur thermisch zerfällt ohne dass weiterer Coinitiator notwendig ist.

Der Initiator kann auch in Stufen zugegeben werden, bzw. die Geschwindigkeit der InitiatorZugabe kann über die Zeit variiert werden.

Um Polymerisate mit niedrigem mittlerem Molekulargewicht herzustellen, ist es oft zweckmä-ßig, die Copolymerisation in Gegenwart von Reglern durchzuführen. Hierfür können übliche Regler verwendet werden, wie beispielsweise organische SH-Gruppen enthaltende Verbindungen, wie 2-Mercaptoethanol, 2-Mercaptopropanol, Mercaptoessigsäure, *tert.*-Butylmercaptan, *n*-Octylmercaptan, *n*-Dodecylmercaptan und *tert.*-Dodecylmercaptan, $C_1$- bis $C_4$-Aldehyde, wie Formaldehyd, Acetaldehyd, Propionaldehyd, Hydroxylammoniumsalze wie Hydroxylammoniumsulfat, Ameisensäure, Natriumbisulfit, hypophosphorige Säure bzw. deren Salze oder Isopropanol. Die Polymerisationsregler werden im Allgemeinen in Mengen von 0,1 bis 20 Gew.-%, bezogen auf die Monomeren eingesetzt. Auch durch die Wahl des geeigneten Lösungsmittels kann auf das mittlere Molekulargewicht Einfluss genommen werden. So führt die Polymerisation in Gegenwart von Verdünnungsmitteln mit benzylischen H-Atomen, oder in Gegenwart von sekundären Alkoholen wie z. B. Isopropanol zu einer Verringerung des mittleren Molekulargewichtes durch Kettenübertragung.

Polymerisate mit geringem bzw. geringerem Molekulargewicht erhält man auch durch: Variation der Temperatur und/oder der Initiator-Konzentration und/oder der Zulaufgeschwindigkeit der Monomeren.

Um höhermolekulare Copolymerisate herzustellen, ist es oft zweckmäßig, bei der Polymerisation in Gegenwart von Vernetzern zu arbeiten. Solche Vernetzer sind Verbindungen mit zwei oder mehreren ethylenisch ungesättigten Gruppen, wie beispielsweise Diacrylate oder Dimethacrylate von mindestens zweiwertigen gesättigten Alkoholen, wie z.B. Ethylenglykoldiacrylat, Ethylenglykoldimethacrylat, 1,2-Propylenglykoldiacrylat, 1,2-Propylenglykoldimethacrylat, Butandiol-1,4-diacrylat, Butandiol-1,4-dimethacrylat, Hexandioldiacrylat, Hexandioldimethacrylat, Neopentylglykoldiacrylat, Neopentylglykoldimethacrylat, 3-Methylpentandioldiacrylat und 3-Methylpentandioldimethacrylat. Auch die Acrylsäure- und Methacrylsäureester von Alkoholen mit mehr als 2 OH-Gruppen können als Vernetzer eingesetzt werden, z.B. Trimethylolpropantriacrylat oder Trimethylolpropantrimethacrylat. Eine weitere Klasse von Vernetzern sind Diacrylate oder Dimethacrylate von Polyethylenglykolen oder Polypropylenglykolen mit Molekulargewichten von jeweils 200 bis 9 000. Polyethylenglykole bzw. Polypropylenglykole, die für die Herstellung der Diacrylate oder Dimethacrylate verwendet werden, haben vorzugsweise ein Molekulargewicht von jeweils 400 bis 2 000. Außer den Homopolymerisaten des Ethylenoxids bzw. Propylenoxids können auch Blockcopolymerisate aus Ethylenoxid und Propylenoxid oder Copolymerisate aus Ethylenoxid und Propylenoxid eingesetzt werden, die die Ethylenoxid- und Propylenoxid-Einheiten statistisch verteilt enthalten. Auch die Oligomeren des Ethylenoxids bzw. Propylenoxids sind für die Herstellung der Vernetzer

geeignet, z.B. Diethylenglykoldiacrylat, Diethylenglykoldimethacrylat, Triethylenglykoldiacrylat, Triethylenglykoldimethacrylat, Tetraethylenglykoldiacrylat und/oder Tetraethylenglykoldimethacrylat.

Als Vernetzer eignen sich weiterhin Vinylacrylat, Vinylmethacrylat, Vinylitakonat, Adipinsäuredivinylester, Butandioldivinylether, Trimethylolpropantrivinylether, Allylacrylat, Allylmethacrylat, Methylallymethacrylat, Diallylphthalat, Triallylisocyanurat, Pentaerithrittriallylether, Triallylsaccharose, Pentaallylsaccharose, Pentaallylsucrose, Methylenbis(meth)acrylamid, Divinylethylenharnstoff, Divinylpropylenharnstoff, Divinylbenzol, Divinyldioxan, Triallylcyanurat, Tetraallylsilan, Tetravinylsilan und Bis- oder Polyacrylsiloxane (z.B. Tegomere® der Evonik Industries AG).

Die Vernetzer werden vorzugsweise in Mengen von 0,1 bis 70 Gew.-%, bezogen auf die zu polymerisierenden Monomere einer Stufe, eingesetzt. Die Vernetzer können in jeder Stufe zugegeben werden.

Weiterhin kann es vorteilhaft sein, die Monomertröpfchen bzw. Polymerteilchen durch grenzflächenaktive Hilfsstoffe zu stabilisieren. Typischerweise verwendet man hierzu Emulgatoren oder Schutzkolloide. Es kommen anionische, nichtionische, kationische und amphotere Emulgatoren in Betracht. Anionische Emulgatoren sind beispielsweise Alkylbenzylsulfonsäuren Erdalkaliealkylbenzolsulfonate, sulfonierte Fettsäuren, sulfonierte Olefine, sulfonierte Diphenylether, Sulfosuccinate, Fettalkoholsulfate, Alkylphenolsulfate, Alkylpolyglycolethersulfate, Fettalkoholethersulfate Fettalkoholphosphate, Alkylphenolphosphate, Alkylpolyglycoletherphosphate, Alkylpolyalkylenoxidphosphate, und Fettalkoholetherphosphate. Als nichtionische Emulgatoren können beispielsweise Alkylphenolethoxylate, Primäralkoholethoxilate, Fettsäureethoxilate, Alkanolamidethoxilate, und Fettaminethoxilate verwendet werden. Als kationische bzw. amphotere Emulgatoren werden beispielsweise verwendet: Quaternisierte Aminalkoxylate, Alkylbetaine, Alkylamidobetaine und Sulfobetaine.

Typische Schutzkolloide sind beispielsweise Cellulosederivate, Polyvinylacetat, Polyvinylalkohol, Polyvinylether, Stärke und Stärkederivate, Dextran, Polyvinylpyrrolidon, Polyvinylpyridin, Polyethylenimin, Polyvinylimidazol, Polyvinylsuccinimid, Polyvinyl-2-methylsuccinimid, Polyvinyl-1,3-oxazolidon-2, Polyvinyl-2-methylimidazolin und Maleinsäure bzw. Maleinsäureanhydrid enthaltende Copolymerisate, wie sie z.B. in DE 2 501123 beschrieben sind.

Vorzugsweise werden Erdalkalialkylbenzolsulfonate und Alkylpolyglycolethersulfate eingesetzt.

Die Emulgatoren oder Schutzkolloide werden üblicherweise in Konzentrationen von 0,05 bis 20 Gew.-%, bezogen auf die zu polymerisierenden Monomere beziehungsweise auf die zu polymerisierenden Monomere einer Stufe, eingesetzt. Die Durchführung der Polymerisation kann nach einer Vielzahl von Varianten kontinuierlich oder diskontinuierlich durchgeführt werden. Üblicherweise legt man einen Teil der Monomeren gegebenenfalls in einem geeigneten Verdünnungsmittel oder Lösungsmittel und gegebenenfalls in Anwesenheit eines Emulgators, eines Schutzkolloids oder weiterer Hilfsstoffe vor, inertisiert, und erhöht die Temperatur bis zum Erreichen der gewünschten Polymerisationstemperatur. Es kann allerdings auch lediglich ein geeignetes Verdünnungsmittel vorgelegt sein. Innerhalb eines definierten Zeitraumes werden der Radikalinitiator, weitere Monomere und sonstige Hilfsstoffe, wie z.B. Regler oder Vernetzer jeweils gegebenenfalls in einem Verdünnungsmittel zu dosiert. Die Zulaufzeiten können unterschiedlich lang gewählt werden. Beispielsweise kann man für den Initiatorzulauf eine längere Zulaufzeit wählen als für den Monomerzulauf.

Wird das Polymerisat in einem wasserdampfflüchtigen Lösungsmittel oder Lösungsmittelgemisch hergestellt, so kann das Lösungsmittel durch Einleiten von Wasserdampf abgetrennt werden, um so zu einer wässrigen Lösung oder Dispersion zu gelangen. Das Polymerisat kann von dem organischen Verdünnungsmittel auch durch einen Trocknungsprozess abgetrennt werden.

Durch das erfindungsgemäße Verfahren erhält man eine deutlich höhere Streueffizienz in Anstrichmitteln und damit eine deutliche Verbesserung des Weißgrades. Außerdem erhält man Teilchen mit einem deutlich größeren Hohlraum. Der Weißgrad der Polymerisatteilchen ist größer 70, bevorzugt größer 79.

Ein weiterer Gegenstand der Erfindung ist ebenfalls die Verwendung der erfindungsgemäß erhältlichen organischen Hohlteilchen in Anstrichmitteln, Papierbeschichtungen, Schäumen, Pflanzenschutzmitteln, Tinten, thermoplastischen Formmassen und kosmetischen Mitteln, bevorzugt in Anstrichmitteln.

Ein weiterer Gegenstand der Erfindung ist ein Anstrichmittel in Form einer wässrigen Zusammensetzung, enthaltend

- wenigstens ein erfindungsgemäßes organisches Hohlteilchen, wie zuvor definiert,
- wenigstens ein filmbildendes Polymer
- gegebenenfalls (an)organische Füllstoffe und/oder gegebenenfalls weitere (an)organisches Pigmente,
- gegebenenfalls wenigstens ein übliches Hilfsmittel, und
- Wasser.

Geeignete filmbildende Polymere können wässrige Emulsionspolymerisate basierend auf Reinacrylatpolymeren bzw. Styrolacrylatpolymere sein, sowie alle weiteren filmbildende Polymere für Beschichtungen bestehend aus harzartigen Kondensationsprodukten beinhaltend Phenolate und Aminoplaste sowie beinhaltend Harnstoffformaldehyd und Melaminformaldehyd. Ebenso ist die Verwendung von weiteren Polymeren basierend auf wasserdispergierbaren Alkyden, Polyurethanen, Polyestern, Ethylvinylacetaten sowie Styrolbutadien möglich.

Geeignete Füllstoffe in Klarlacksystemen sind z. B. Mattierungsmittel, die so gewünscht den Glanz stark beeinträchtigen. Mattierungsmittel sind in der Regel transparent und können sowohl organisch als auch anorganisch sein. Anorganische Füllstoffe auf Basis von Silika sind am besten geeignet und sind weit verbreitet im Handel erhältlich. Beispiele sind die Syloid®-Marken von W.R. Grace & Company und die Acematt®-Marken von der Fa. Evonik Industries AG. Organische Mattierungsmittel sind z.B. erhältlich von der Fa. BYK-Chemie GmbH unter die Ceraflour®- und die Ceramat®-Marken, von der Fa. Deuteron GmbH unter die Deuteron MK®-Marke. Andere geeignete Füllstoffe für Dispersionsfarben sind Alumosilicate, wie Feldspäte, Silicate, wie Kaolin, Talkum, Glimmer, Magnesit, Erdalkalicarbonate, wie Calciumcarbonat, beispielsweise in Form von Calcit oder Kreide, Magnesiumcarbonat, Dolomit, Erdalkalisulfate, wie Calciumsulfat, Siliciumdioxid etc. In Anstrichmitteln werden naturgemäß feinteilige Füllstoffe bevorzugt. Die Füllstoffe können als Einzelkomponenten eingesetzt werden. In der Praxis haben sich jedoch Füllstoffmischungen besonders bewährt, z. B. Calciumcarbonat/Kaolin, Calciumcarbonat/Talkum. Glänzende Anstrichmittel weisen in der Regel nur geringe Mengen sehr feinteiliger Füllstoffe auf oder enthalten keine Füllstoffe.

Feinteilige Füllstoffe können auch zur Erhöhung der Deckkraft und/oder zur Einsparung von Weißpigmenten eingesetzt werden. Zur Einstellung der Deckkraft des Farbtons und der Farbtiefe werden vorzugsweise Abmischungen aus Farbpigmenten und Füllstoffen eingesetzt.

Geeignete Pigmente sind beispielsweise anorganische Weißpigmente wie Titandioxid, vorzugsweise in der Rutilform, Bariumsulfat, Zinkoxid, Zinksulfid, basisches Bleicarbonat, Antimontrioxid, Lithopone (Zinksulfid + Bariumsulfat) oder farbige Pigmente, beispielsweise Eisenoxide, Ruß, Graphit, Zinkgelb, Zinkgrün, Ultramarin, Manganschwarz, Antimonschwarz, Manganviolett, Pariser Blau oder Schweinfurter Grün. Neben den anorganischen Pigmenten können die erfindungsgemäßen Dispersionsfarben auch organische Farbpigmente, z. B. Sepia, Gummigutt, Kasseler Braun, Toluidinrot, Pararot, Hansagelb, Indigo, Azofarbstoffe, anthrachinoide und indigoide Farbstoffe sowie Dioxazin, Chinacridon-, Phthalocyanin-, Isoindolinon- und Metallkomplexpigmente enthalten. Weiterhin geeignet sind die Luconyl®-Marken der Fa. BASF SE, wie z.B. das Lyconyl®-Gelb, Luconyl®-Braun und Luconyl®-Rot, insbesondere die transparenten Varianten.

Zu den üblichen Hilfsmitteln zählen Netz- oder Dispergiermittel, wie Natrium-, Kalium- oder Ammoniumpolyphosphate, Alkalimetall- und Ammoniumsalze von Acrylsäure- oder Maleinsäureanhydridcopolymeren, Polyphosphonate, wie 1-Hydroxyethan-1,1-diphosphonsaures Natrium sowie Naphthalinsulfonsäuresalze, insbesondere deren Natriumsalze.

Wichtiger sind die Filmbildehilfsmittel, die Verdicker und Entschäumer. Geeignete Filmbildehilfsmittel sind z.B. Texanol® von der Fa. Eastman Chemicals und die Glykolether und -Ester z.B. im Handel erhältlich von BASF SE, unter den Namen Solvenon® und Lusolvan®, und von Dow Chemicals unter den Handelsnamen Dowanol®. Die Menge beträgt vorzugsweise <10 Gew.-% und besonders bevorzugt < 5 Gew.-% auf Gesamtformulierung. Es ist auch möglich völlig ohne Lösemittel zu formulieren.

Weitere geeignete Hilfsmittel sind Verlaufsmittel, Entschäumer, Biozide und Verdicker. Geeignete Verdicker sind z. B. Assoziativverdicker, wie Polyurethanverdicker. Die Menge des Verdickers beträgt vorzugsweise weniger als 2,5 Gew.-%, besonders bevorzugt weniger als 1,5 Gew.-% Verdicker, bezogen auf Feststoffgehalt des Anstrichmittels. Weitere Formulierungshinweise für Holzanstriche sind ausführlich beschrieben in "water-based acrylates for decorative coatings " von den Autoren M. Schwartz und R. Baumstark, ISBN 3-87870-726-6.

Das erfindungsgemäße Anstrichmittel kann in üblicher Weise auf Substrate aufgebracht werden, z. B. durch Streichen, Spritzen, Tauchen, Rollen, Rakeln.

Die Erfindung soll anhand nachfolgender nicht einschränkender Beispiele erläutert werden.

Experimentelle Methoden

Bestimmung der Glasübergangstemperatur

Die Glasübergangstemperaturen wurden durch theoretische Berechnung per Fox-Gleichung (John Wiley & Sons Ltd., Baffins Lane, Chichester, England, 1997) bestimmt, wobei für Polymere mit Carboxylsäuregruppen die Glasübergangstemperatur im protonierten Zustand verwendet wurde.

$$1/T_g = W_a/T_{ga} + W_b/T_{gb},$$

wobei

$T_{ga}$ und $T_{gb}$ = Glasübergangstemperatur von Polymer "a" und "b"
$W_a$ und $W_b$ = Gewichtsanteil von Polymer "a" und "b"

Messung der Partikelgröße

Die Bestimmung der Teilchengrößen erfolgte hierin und in den anhängenden Ansprüchen mit Hilfe der Hydrodynamischen Fraktionierung mit einem PSDA (Particle Size Distribution Analyser) der Fa. Polymer Labs. Der verwendete Säulentyp Cartridge PL0850-1020 wurde bei einem Durchfluss von 2 $ml \cdot min^{-1}$ betrieben. Die Proben wurden mit der Eluentlösung bis zu einer Absorption von 0,03 $AU \cdot \mu l^{-1}$ verdünnt.
Die Probe wird durch das Größenausschlussprinzip abhängig vom hydrodynamischen Durchmesser eluiert. Das Elutionsmittel enthält 0,2 Gew.-% Dodecylpoly(ethylenglycolether)$_{23}$, 0,05 Gew.-% Natriumdodecylsulfonat, 0,02 Gew.-% Natriumdihydrogenphosphat und 0,02 Gew.-% Natriumazid in entionisiertem-Wasser. Der pH liegt bei 5,8. Die Elutionszeit wird mit Polystyrol-Eichlatices kalibriert. Gemessen wird im Bereich 20 nm bis 1200 nm. Detektiert wird mit einem UV Detektor bei einer Wellenlänge 254 nm.

Die Teilchengröße Bestimmung kann weiterhin mit Hilfe eines Coulter M4+ (Particle Analyzer) oder mit Hilfe der Photonenkorrelations-spektroskopie auch als quasielastische Lichtstreuung oder Dynamische Lichtsteuung bekannt (DIN ISO 13321:2004-10) mit einem HPPS (High Performance Particle Sizer) der Fa. Malvern erfolgen.

Durchführung der Weißgradmessung

In einem Gefäß werden 6 g der unten beschriebenen Farbpaste und 0,312 g bezogen auf den Feststoff der Hohlteilchendispersion abgewogen, die Mischung wird - ohne Luft einzurühren - homogenisiert. Mit Hilfe eines 200 µm-Rakels wird mit einer Geschwindigkeit von 0,9 cm/sec ein Film dieser Mischung auf eine schwarze Kunststoff-Folie (matte Ausführung, Artikel-Nr. 13.41 EG 870934001, Bernd Schwegmann GmbH & Co. KG, D) ausgezogen. Die Proben werden bei 23°C und einer relativen Luftfeuchtigkeit von 40-50% 24h getrocknet. Im Anschluss daran wird mit einem Spektrophotometer der Marke "Minolta CM-508i " der Weißgrad (L-Wert aus L a b-Farbraum nach **EN ISO 11664-4:2012-06)** an drei verschiedenen Stellen gemessen. Die Messpunkte werden markiert, um in der Folge mit einer Mikrometerschraube die entsprechenden Schichtdicken des Farbfilms durch Differenzmessung relativ zur unbeschichteten Kunststoff-Folie zu bestimmen. Nach Berechnung einer durchschnittlichen Schichtdicke sowie eines durchschnittlichen Weißgrades aus den drei Einzelmessungen erfolgt schlussendlich eine Normierung des dabei erhaltenen Weißgrades auf eine Trockenschichtdicke von 50 □m durch lineare Extrapolation. Die hierfür nötige Kalibrierung erfolgte durch Weißgradmessung einer Standard-Hohlteilchendispersion in einem Trockenschichtdicken-Bereich von ca. 30-60 □m.

Herstellung der Farbpaste

In einem Gefäß werden 185 g Wasser vorgelegt und danach die folgenden Einsatzstoffe in der angegebenen Reihenfolge unter einem Dissolver bei ca. 1000 Upm zugegeben und für insgesamt ca. 15 Minuten bis zur Homogenität gerührt:

> 2 g 20 Gew.-% Natronlauge, 12 g Pigmentverteiler® MD 20 (Copolymer aus Maleinsäure und Diisobutylen der Firma BASF SE), 6 g Agitan® E 255 (Siloxan-Entschäumer der Firma Münzing Chemie GmbH), 725 g Acronal® A 684 (Bindemittel, 50 Gew.-% Dispersion der Firma BASF SE), 40 g Texanol® (Filmbildehilfsmittel der Firma Eastman Chemical Company), 4 g Agitan® E 255 (Siloxan-Entschäumer der Firma Münzing Chemie GmbH),
> 25 g DSX® 3000 (30 Gew.-%, Assoziativverdicker: hydrophobic modified polyether (HMPE) der Firma BASF SE) und 2 g DSX ®3801 (45 Gew.-% Assoziativverdicker: hydrophobic modified ethoxylated urethane (HEUR) der Firma BASF SE)

Beispiele:

Herstellung der Kern-Schale-Teilchen:

Alle organischen Rohstoffe, die nicht als wässrige Lösung vorlagen, wurden vor der Synthese durch Destillation gereinigt.

Beispiel 1:

Dispersion B1 (Quellkern):

Die Vorlage, bestehend aus 526 g Wasser, wurde in einem Polymerisationsgefäß, welches mit einem Ankerrührer, Rückflusskühler und zwei Zulaufgefäßen ausgestattet war, in einer Stickstoffatmosphäre auf eine Temperatur

von 82°C geheizt. Nach Zugabe einer Lösung aus 76 g Wasser, 1,69 g Disponil® FES 993 (Alkylpolyglycolethersulfate (30 Gew.-%)) und 10,96 EFKA® 3031 (Lösungsmittelfrei, Polysiloxan-Polyalkylenoxid-graft-Copolymere mit Kammstruktur, BASF SE) wurde gewartet bis die Temperatur der Lösung wiederum 82 °C erreicht hatte. Dann wurden nacheinander Voremulsion 1, bestehend aus 15,62 g Wasser, 0,28 g Disponil® FES 993, 28,66 g Methylmethacrylat und 0,34 g Methacrylsäure und 11,43 g einer 10 Gew.-% wässrige Nariumperoxodisulfat Lösung zugegeben und für 30 min polymerisiert wobei die Temperatur innerhalb des Polymerisationsgefäßes auf 85°C eingestellt wurde. Im Anschluss daran wurde Voremulsion 2, bestehend aus 236 g Wasser, 18,63 g Disponil® FES 993, 250 g Methylmethacrylat und 144,31 g Methacrylsäure, innerhalb von 120 min bei 85°C zu dosiert. Abschließend wurde das Zulaufgefäß mit 10 g Wasser gespült und weiter 15 min polymerisiert.

Feststoffgehalt: 33,2%
pH-Wert: 3,6
Teilchengröße (PSDA, Volumen median): 124 nm
Glasübergangstemperatur Kernstufenpolymer: 123°C

Dispersion C1

Die Vorlage, bestehend aus 451 g Wasser und 94,4 g von Dispersion B1, wurde in einem Polymerisationsgefäß, welches mit einem Ankerrührer, Rückflusskühler und zwei Zulaufgefäßen ausgestattet war, in einer Stickstoffatmosphäre auf eine Temperatur von 78°C geheizt und nach Zugabe von 16,67 g einer 2,5 Gew.-% wässrigen Natriumperoxodisulfat-Lösung 5 min anpolymerisiert. Dann wurde Voremulsion 1, bestehend aus 28,3 g Wasser, 2,22 g Disponil® LDBS 20 (Natriumdodecylbenzolsulfonat (20 Gew.-%)), 3,56 g Methacrylsäure, 23,15 g Methylmethacrylat und 32,6 g Styrol, zusammen mit 33,34 g einer 2,5 Gew.-% wässrigen Natriumperoxodisulfat-Lösung innerhalb von 60 min bei 78°C beginnend zu dosiert, während des Zulaufs wurde die Innentemperatur auf 80°C erhöht. Nach Ende der Zuläufe wurde Voremulsion 2 bestehend aus 97,72 g Wasser, 4,48 g Disponil® LDBS 20, 1,78 g Leinölfettsäure, 0,87 g Allylmethacrylat und 303,42 g Styrol, zusammen mit 8,34 g einer 2,5 Gew.-% wässrigen Natriumperoxodisulfat-Lösung innerhalb von 120 min bei 80°C beginnend zu dosiert, während des Zulaufs wurde die Innentemperatur auf 82°C erhöht. Nach Ende der Zuläufe wurde die Innentemperatur auf 93 °C erhöht und für 15 min gerührt bevor 16,67 g $\alpha$-Methylstyrol zugeben wurden. Nach weiteren 40 min rühren wurde die Temperatur auf 87 °C gesenkt. Nach Erreichen der Temperatur wurde 15 min gerührt bevor über 30 min 209,55 g einer 1,6 Gew.-% wässrigen Ammoniak Lösung zu dosiert wurden. Nach erneutem 15 minütigem Nachrrühren wurde über 30 min Voremulsion 3 bestehend aus 47 g Wasser, 0,83 g Disponil® LDBS 20 und 34,82 g Styrol zu dosiert. Fünf Minuten nach Zulauf Ende wurden 8,04 g einer 10 Gew.-% wässrigen Lösung von *tert*-Butylhydroperoxid zusammen mit 19 g Wasser zugegeben und über 60 min 32,5 g einer 3,25 Gew.-% wässrigen Rongalit-C® Lösung zu dosiert.

Feststoffgehalt: 29,4%
pH-Wert: 9,3
Teilchengröße (Autosizer): 351 nm
Weißgrad: 81
Glasübergangstemperatur Hüllenstufenpolymer: 110°C

Vergleichsbeispiel 1

Dispersion BV1 (Quellkern)

Die Vorlage, bestehend aus 526 g Wasser, wurde in einem Polymerisationsgefäß, welches mit einem Ankerrührer, Rückflusskühler und zwei Zulaufgefäßen ausgestattet war, in einer Stickstoffatmosphäre auf eine Temperatur von 82°C geheizt. Nach Zugabe einer Lösung aus 76 g Wasser und 1,69 g Disponil® FES 993 wurde gewartet bis die Temperatur der Lösung wiederum 82 °C erreicht hatte. Dann wurden nacheinander Voremulsion 1, bestehend aus 15,62 g Wasser, 0,28 g Disponil® FES 993, 28,66 g Methylmethacrylat und 0,34 g Methacrylsäure und 11,43 g einer 10 Gew.-% wässrigen Nariumperoxodisulfat Lösung zugegeben und für 30 min polymerisiert wobei die Temperatur innerhalb des Polymerisationsgefäßes auf 85°C eingestellt wurde. Im Anschluss daran wurde Voremulsion 2, bestehend aus 236 g Wasser, 18,63 g Disponil® FES 993, 250 g Methylmethacrylat und 144,31 g Methacrylsäure, innerhalb von 120 min bei 85°C zu dosiert. Abschließend wurde das Zulaufgefäß mit 10 g Wasser gespült und weiter 15 min polymerisiert.

Feststoffgehalt: 33,3%
pH-Wert: 3,6
Teilchengröße (Autosizer): 121 nm
Glasübergangstemperatur Kernstufenpolymer: 123°C

Dispersion CV1

Die Vorlage, bestehend aus 451 g Wasser und 94,4 g von Dispersion BV1, wurde in einem Polymerisationsgefäß, welches mit einem Ankerrührer, Rückflusskühler und zwei Zulaufgefäßen ausgestattet war, in einer Stickstoffatmosphäre auf eine Temperatur von 78°C geheizt und nach Zugabe von 16,67 g einer 2,5 Gew.-% wässrigen Natriumperoxodisulfat-Lösung 5 min anpolymerisiert. Dann wurde Voremulsion 1, bestehend aus 28,3 g Wasser, 2,22 g Disponil® LDBS 20, 3,56 g Methacrylsäure, 23,15 g Methylmethacrylat und 32,6 g Styrol, zusammen mit 33,34 g einer 2,5 Gew.-% wässrigen Natriumperoxodisulfat-Lösung innerhalb von 60 min bei 78°C beginnend zu dosiert, während des Zulaufs wurde die Innentemperatur auf 80°C erhöht. Nach Ende der Zuläufe wurde Voremulsion 2 bestehend aus 97,72 g Wasser, 4,48 g Disponil® LDBS 20, 1,78 g Leinölfettsäure, 0,87 g Allylmethacrylat und 303,42 g Styrol, zusammen mit 8,34 g einer 2,5%igen Natriumperoxodisulfat-Lösung innerhalb von 120 min bei 80°C beginnend zu dosiert, während des Zulaufs wurde die Innentemperatur auf 82°C erhöht. Nach Ende der Zuläufe wurde die Innentemperatur auf 93 °C erhöht und für 15 min gerührt bevor 16,67 g $\alpha$-Methylstyrol zugeben wurden. Nach weiteren 40 min rühren wurde die Temperatur auf 87 °C gesenkt. Nach Erreichen der Temperatur wurde 15 min gerührt bevor über 30 min 209,55 g einer 1,6 Gew.-% wässrigen Ammoniak Lösung zu dosiert wurden. Nach erneuten 15 minütigem Rühren wurde über 30 min Voremulsion 3 bestehend aus 47 g Wasser, 0,83 g Disponil® LDBS 20 und 34,82 g Styrol zu dosiert. Fünf Minuten nach Zulauf Ende wurden 8,04 g einer 10 Gew.-% wässrigen Lösung von *tert*-Butylhydroperoxid zusammen mit 19 g Wasser zugegeben und über 60 min 32,5 g einer 3,25%igen wässrigen Rongalit-C® Lösung zu dosiert.

Feststoffgehalt: 29,0%
pH-Wert: 9,6
Teilchengröße (Autosizer): 351 nm
Weißgrad: 31
Glasübergangstemperatur Hüllenstufenpolymer: 110°C

Beispiel 2:

Dispersion B2 (Quellkern)

Die Vorlage, bestehend aus 521 g Wasser, 1,64 g Disponil® FES 993 und 13,27 EFKA 3031 wurde in einem Polymerisationsgefäß, welches mit einem Ankerrührer, Rückflusskühler und zwei Zulaufgefäßen ausgestattet war, in einer Stickstoffatmosphäre auf eine Temperatur von 82°C geheizt. Anschließend wurde Voremulsion 1, bestehend aus 80,68 g Wasser, 0,27 g Disponil® FES 993, 27,88 g Methylmethacrylat und 0,33 g Methacrylsäure und 15,88 g einer 7 Gew.-% wässrigen Nariumperoxodisulfat Lösung zugegeben und für 30 min polymerisiert wobei die Temperatur innerhalb des Polymerisationsgefäßes auf 85°C eingestellt wurde. Im Anschluss daran wurde Voremulsion 2, bestehend aus 485,67 g Wasser, 27,22 g Disponil® FES 993, 332,32 g Methylmethacrylat, 0,9 g Allymethacrylat und 228,82 g Methacrylsäure, innerhalb von 120 min bei 85°C zu dosiert. Anschließend wurde der Zulauf mit 450,16 g Wasser gespült. Fünfzehn Minuten nach Zulaufende wurden parallel über 75 min 133,35 g einer 1,5 Gew.-% wässrige Nariumperoxodisulfat Lösung, eine Mischung aus 89,33 g n-Butylmethacrylat und 498,33 g Methylmethacrylat sowie eine Lösung von 3,59 g Disponil® LDBS 20 und 12,07 g Methacrylsäure in 700 g Wasser zu dosiert. Abschließend wurde das Zulaufgefäß mit 48 g Wasser gespült und weiter 30 min polymerisiert.

Feststoffgehalt: 33,1%
pH-Wert: 2,9
Teilchengröße (PSDA, Volumen median): 188 nm
Glasübergangstemperatur Kernstufenpolymer: 123°C

Dispersion C2:

Die Vorlage, bestehend aus 354 g Wasser und 180 g von Dispersion B2, wurde in einem Polymerisationsgefäß, welches mit einem Ankerrührer, Rückflusskühler und zwei Zulaufgefäßen ausgestattet war, in einer Stickstoffatmosphäre auf eine Temperatur von 81°C geheizt. Nach Zugabe von 25,2 g einer 1,4 Gew.-% wässrigen Natriumperoxodisulfat-Lösung wurde Voremulsion 1, bestehend aus 102 g Wasser, 13,6 g Disponil® LDBS 20, 2 g Leinölfettsäuren, 17,2 g Methylmethacrylat, 10,88 g Acrylnitril, 3,4 g Allylmethacrylat und 206,92 g Styrol, zusammen mit 24,32 g einer 2,5 Gew.-% wässrigen Natriumperoxodisulfat-Lösung innerhalb von 120 min zu dosiert. Nach Ende der Zuläufe wurden 3,36 g einer 2,5 Gew.-% wässrigen Natriumperoxodisulfat-Lösung zugegeben und die Innentemperatur über 40 min auf 92 °C erhöht. Anschließend wurden in 10 min 23,76 g $\alpha$-Methylstyrol zugeben. Nach weiteren 20 min rühren wurden in 20 min 219,28 g einer 3 Gew.-% wässrigen Natriumhydroxid Lösung zu dosiert und für 5 min eingerührt. Anschließend wurde über 15 min Voremulsion 2 bestehend aus 40,44 g Wasser, 7 g Disponil® LDBS 20, 0,28 g Methacrylsäure und 78 g Styrol zu dosiert. Fünf Minuten nach Zulauf Ende wurden 5,64 g einer 10 Gew.-% wässrigen Lösung von *tert*-Butylhydroperoxid zugegeben und über 20 min 31 g einer 3 Gew.-% wässrigen Rongalit-C® Lösung zu dosiert. 30 Minuten nach Zulauf Ende wurde erneut 9,16 g einer 10 Gew.-% wässrigen Lösung von *tert*-Butylhydroperoxid und 8,52 g einer 5,1 Gew.-% wässrigen Rongalit-C® Lösung parallel über 60 min zu dosiert.

Feststoffgehalt: 29,5 %
pH-Wert: 8,9
Teilchengröße (PSDA, Volumen median): 398 nm
Weißgrad: 80
Glasübergangstemperatur Hüllenstufenpolymer: 111°C

Vergleichsbeispiel 2:

Saat Dispersion AV1

Aus 123,85 g Wasser 0,35 g Disponil® FES 993, 182 g n-Butylacrylat, 163,45 g Methyl-methacrylat und 4,55 g Methacrylsäure wurde eine Voremulsion hergestellt. Die Vorlage, bestehend aus 1190,9 g Wasser, 24,97 g Disponil® FES 993 sowie 22,19 g der Voremulsion, wurde in einem Polymerisationsgefäß, welches mit einem Ankerrührer, Rückflusskühler und zwei Zulaufgefäßen ausgestattet war, in einer Stickstoffatmosphäre auf eine Temperatur von 80°C geheizt und nach Zugabe von 67,2 g einer 2,5 Gew.-% wässrigen Natriumperoxodisulfat-Lösung 15 min anpolymerisiert. Dann wurde der Rest der Voremulsion innerhalb von 60 min bei 80°C zu dosiert. Anschließend wurde noch 15 min polymerisiert und innerhalb von 20 min auf 55°C abgekühlt. Zur Abreicherung der Restmonomeren wurden dann 3,5 g einer 10 Gew.-% wässrigen *tert*-Butylhydroperoxid-Lösung sowie 2,19 g einer 10 Gew.-% wässrigen Rongalit C-Lösung zum Reaktionsgemisch zugegeben, nach einer Stunde rühren wurde auf 30°C abgekühlt und durch Zugabe von 4,38 g 25 Gew.-% wässrigen Ammoniak-Lösung der pH-Wert der Dispersion eingestellt.

Feststoffgehalt: 19,9%
Teilchengröße (PSDA, Volumen median): 50 nm

Dispersion BV2 (Quellkern)

Die Vorlage, bestehend aus 1822,6 g Wasser und 169 g der Saat Dispersion A2, wurde in einem Polymerisationsgefäß, welches mit einem Ankerrührer, Rückflusskühler und zwei Zulaufgefäßen ausgestattet war, in einer Stickstoffatmosphäre auf eine Temperatur von 82°C geheizt. Zwei Minuten nach Zugabe von 26,68 g einer 7 Gew.-% wässrigen Nariumperoxodisulfat Lösung, wurden in 90 min parallel eine Mischung aus 0,62 g Allylmethacrylat und 217,34 g Methylmethacrylat und eine Lösung von 9,34 g Lutensit A-EP A, 9,34 g Disponil® LDBS 20 und 166 g Methacrylsäure in 562 g Wasser zu dosiert. Zehn Minuten nach Zulaufende wurden parallel über 75 min 92,55 g einer 1,5 Gew.-% wässrigen Nariumperoxodisulfat Lösung, eine Mischung aus 62 g n-Butylmethacrylat und 345,86 g Methylmethacrylat sowie eine Lösung von 2,49 g Disponil® LDBS 20 und 8,38 g Methacrylsäure in 276,89 g Wasser zu dosiert. Abschließend wurde das Zulaufgefäß mit 33 g Wasser gespült und weiter 30 min nachpolymerisiert.

Feststoffgehalt: 21,9%
pH-Wert: 3,5
Teilchengröße (PSDA, Volumen median): 190 nm
Glasübergangstemperatur Kernstufenpolymer: 104°C

Dispersion CV2

Die Vorlage, bestehend aus 261 g Wasser und 273,21 g von Dispersion BV2, wurde in einem Polymerisationsgefäß, welches mit einem Ankerrührer, Rückflusskühler und zwei Zulaufgefäßen ausgestattet war, in einer Stickstoffatmosphäre auf eine Temperatur von 81°C geheizt. Nach Zugabe von 25,2 g einer 1,4 Gew.-% wässrigen Natriumperoxodisulfat-Lösung wurde Voremulsion 1, bestehend aus 102 g Wasser, 13,6 g Disponil® LDBS 20, 2 g Leinölfettsäuren, 17,2 g Methylmethacrylat, 3,4 g Allylmethacrylat und 217,8 g Styrol, zusammen mit 24,32 g einer 2,5 Gew.-% wässrigen Natriumperoxodisulfat-Lösung innerhalb von 120 min zu dosiert. Nach Ende der Zuläufe wurden 3,36 g einer 2,5 Gew.-% wässrigen Natriumperoxodisulfat-Lösung zugegeben und die Innentemperatur über 40 min auf 92 °C erhöht. Anschließend wurden in 10 min 23,76 g $\alpha$-Methylstyrol zugeben. Nach weiteren 20 min rühren wurden in 20 min 219,28 g einer 3 Gew.-% wässrigen Natriumhydroxid Lösung zu dosiert und für 5 min eingerührt. Anschließend wurde über 15 min Voremulsion 2 bestehend aus 40,44 g Wasser, 7 g Disponil® LDBS 20, 0,28 g Methacrylsäure und 78 g Styrol zu dosiert. Fünf Minuten nach Zulauf Ende wurden 5,64 g einer 10 Gew.-% wässrigen Lösung von *tert*-Butylhydroperoxid zugegeben und über 20 min 31 g einer 3 Gew.-% wässrigen Rongalit-C® Lösung zu dosiert. 30 Minuten nach Zulauf Ende wurde erneut 9,16 g einer 10 Gew.-% wässrigen Lösung von *tert*-Butylhydroperoxid und 8,52 g einer 5,1 Gew.-% wässrigen Rongalit-C® Lösung parallel über 60 min zu dosiert.

Feststoffgehalt: 30 %
pH-Wert: 8,3
Teilchengröße (PSDA, Volumen median): 400 nm
Weißgrad: 40
Glasübergangstemperatur Hüllenstufenpolymer: 111°C

Beispiel 3

Dispersion B3 (Quellkern)

Die Vorlage, bestehend aus 521 g Wasser, 1,64 g Disponil® FES 993 und 13,27 EFKA 3031 wurde in einem Polymerisationsgefäß, welches mit einem Ankerrührer, Rückflusskühler und zwei Zulaufgefäßen ausgestattet war, in einer Stickstoffatmosphäre auf eine Temperatur von 82°C geheizt. Anschließend wurde Voremulsion 1, bestehend aus 80,68 g Wasser, 0,27 g Disponil® FES 993, 27,88 g Methylmethacrylat und 0,33 g Methacrylsäure und 15,88 g einer 7 Gew.-% wässrigen Nariumperoxodisulfat Lösung zugegeben und für 30 min polymerisiert wobei die Temperatur innerhalb des Polymerisationsgefäßes auf 85°C eingestellt wurde. Im Anschluss daran wurde Voremulsion 2, bestehend aus 485,67 g Wasser, 27,22 g Disponil® FES 993, 333,22 g Methylmethacrylat und 228,82 g Methacrylsäure, innerhalb von 120 min bei 85°C zu dosiert. Anschließend wurde der Zulauf mit 450,16 g Wasser gespült. Fünfzehn Minuten nach Zulaufende wurden parallel über 75 min 133,35 g einer 1,5 Gew.-% wässrigen Nariumperoxodisulfat Lösung, eine Mischung aus 89,33 g n-Butylmethacrylat und 498,33 g Methylmethacrylat sowie eine Lösung von 3,59 g Disponil® LDBS 20 und 12,07 g Methacrylsäure in 700 g Wasser zu dosiert. Abschließend wurde das Zulaufgefäß mit 48 g Wasser gespült und weiter 30 min polymerisiert.
Feststoffgehalt: 33,3%
pH-Wert: 2,9
Teilchengröße (PSDA, Volumen median): 176 nm
Glasübergangstemperatur Kernstufenpolymer: 123°C

Dispersion C3:

Die Vorlage, bestehend aus 379,4 g Wasser und 180,6 g von Dispersion B3 aus Beispiel 2, wurde in einem Polymerisationsgefäß, welches mit einem Ankerrührer, Rückflusskühler und zwei Zulaufgefäßen ausgestattet war, in einer Stickstoffatmosphäre auf eine Temperatur von 81°C geheizt. Nach Zugabe von 56 g einer 2,5 Gew.-% wässrigen Natriumperoxodisulfat-Lösung wurde Voremulsion 1, bestehend aus 200 g Wasser, 8 g Disponil® LDBS 20, 4 g Methacrysäure, 2 g Allylmethacrylat und 266,4 g Styrol, zusammen mit 16 g einer 2,5 Gew.-% wässrigen Natriumperoxodisulfat-Lösung innerhalb von 90 min zu dosiert. Nach Ende der Zuläufe wurde die Innentemperatur über 20 min auf 92 °C erhöht. Anschließend wurden 12 g einer 10 Gew.-% wässrigen Rongalit-C® Lösung zugegeben und 5 min eingerührt um die Polymerisation zu stoppen. Nach anschließender Zugabe von 36 g einer 10 Gew.-% wässrigen Ammoniak Lösung welche ebenfalls 5 min eingerührt wurde, wurde Voremulsion 2 bestehende aus 40 g Wasser, 12 g Disponil® LDBS 20 und 68 g Styrol über 30 min zu dosiert. Nach Zulauf Ende wurde die Dispersion über 15 min auf 85°C abgekühlt. Anschließend wurde über 40 min 12 g einer 10 Gew.-% wässrigen *tert*-Butylhydroperoxid Lösung zu dosiert. Nach Zulauf Ende wurden erneut 9,14 g einer 10 Gew.-% wässrigen Lösung von *tert*-Butylhydroperoxid und 9,16 g einer 4,8 Gew.-%wässrigen Rongalit-C® Lösung parallel über 60 min zu dosiert.
Feststoffgehalt: 30,1%
pH-Wert: 9,3
Teilchengröße (PSDA, Volumen mode): 386 nm
Weißgrad: 80,6
Glasübergangstemperatur Hüllenstufenpolymer: 108°C

Vergleichsbeispiel 3

Dispersion CV3

Die Vorlage, bestehend aus 289 g Wasser und 271 g von Dispersion BV2 aus Vergleichsbeispiel 2, wurde in einem Polymerisationsgefäß, welches mit einem Ankerrührer, Rückflusskühler und zwei Zulaufgefäßen ausgestattet war, in einer Stickstoffatmosphäre auf eine Tempera-tur von 81°C geheizt. Nach Zugabe von 56 g einer 2,5 Gew.-% wässrigen Natriumperoxodisulfat-Lösung wurde Voremulsion 1, bestehend aus 200 g Wasser, 8 g Disponil® LDBS 20, 4 g Methacrysäure, 2 g Allylmethacrylat und 266,4 g Styrol, zusammen mit 16 g einer 2,5 Gew.-% wässrigen Natriumperoxodisulfat-Lösung innerhalb von 90 min zu dosiert. Nach Ende der Zuläufe wurde die Innentemperatur über 20 min

auf 92 °C erhöht. Anschließend wurden 12 g einer 10 Gew.-% wässrigen Rongalit-C® Lösung zugegeben und 5 min eingerührt um die Polymerisation zu stoppen. Nach anschließender Zugabe von 36 g einer 10 Gew.-% Ammoniak Lösung welche ebenfalls 5 min eingerührt wurde, wurde Voremulsion 2 bestehende aus 40 g Wasser, 12 g Disponil® LDBS 20 und 68 g Styrol über 30 min zu dosiert. Nach Zulauf Ende wurde die Dispersion über 15 min auf 85°C abgekühlt. Anschließend wurde über 40 min 12 g einer 10 Gew.-% wässrigen *tert*-Butylhydroxid Lösung zu dosiert. Nach Zulauf Ende wurden erneut 9,14 g einer 10 Gew.-% wässrigen Lösung von *tert*-Butylhydroperoxid und 9,16 g einer 4,8 Gew.-% wässrigen Rongalit-C® Lösung parallel über 60 min zu dosiert.

Feststoffgehalt: 30,3 %
pH-Wert: 9,2
Teilchengröße (PSDA, Volumen median): 395 nm
Weißgrad: 40
Glasübergangstemperatur Hüllenstufenpolymer: 108°C

Beispiel 4:

Dispersion B4 (Quellkern)

Die Vorlage, bestehend aus 782 g Wasser, wurde in einem Polymerisationsgefäß, welches mit einem Ankerrührer, Rückflusskühler und zwei Zulaufgefäßen ausgestattet war, in einer Stickstoffatmosphäre auf eine Temperatur von 82°C geheizt. Nach Zugabe einer Lösung aus 260,2 g Wasser, 3,29 g Disponil® FES 993 und 26,52 EFKA 3031 wurde gewartet bis die Temperatur der Lösung wiederum 82 °C erreicht hatte. Dann wurden nacheinander Voremulsion 1, bestehend aus 161,2 g Wasser, 0,55 g Disponil® FES 993, 55,73 g Methylmethacrylat und 0,66 g Methacrylsäure und 31,75 g einer 10 Gew.-% wässrigen Nariumperoxodisulfat Lösung zugegeben und für 30 min polymerisiert wobei die Temperatur innerhalb des Polymerisationsgefäßes auf 85°C eingestellt wurde. Im Anschluss daran wurde Voremulsion 2, bestehend aus 971 g Wasser, 0,55 g Disponil® FES 993, 725 g Methylmethacrylat und 418,6 g Methacrylsäure, innerhalb von 120 min bei 85°C zu dosiert. Abschließend wurde das Zulaufgefäß mit 262 g Wasser gespült und weiter 15 min polymerisiert.

Feststoffgehalt: 33,4%
pH-Wert: 3,8
Teilchengröße (PSDA, Volumen median): 147 nm
Glasübergangstemperatur Kernstufenpolymer: 123°C

Dispersion C4

Die Vorlage, bestehend aus 430,43 g Wasser und 76,88 g von Dispersion B4, wurde in einem Polymerisationsgefäß, welches mit einem Ankerrührer, Rückflusskühler und zwei Zulaufgefäßen ausgestattet war, in einer Stickstoffatmosphäre auf eine Temperatur von 81°C geheizt. Anschließend wurden 32,46 g einer 3,2 Gew.-% wässrigen Natriumperoxodisulfat-Lösung über 60 min zu dosiert. Parallel wurden zunächst 9,44 g von Voremulsion 1, bestehend aus 21,4 g Wasser, 0,63 g Rhodacal DS-10 (Natriumdodecylbenzolsulfonat (15 Gew.-%)) 20, 3,76 g Methacrylsäure, 25,16 g Methylmethacrylat und 25,16 g Styrol, in 15 min zugefahren. Anschließend wurden die verbleibende 66,67 g der Voremulsion 1 in 45 min zugefahren, so dass Initiatorzulauf und der Zulauf der Voremulsion 1 zeitgleich enden. 30 min nach Ende der Zuläufe wurde Voremulsion 2 bestehend aus 114 g Wasser, 3,36 g Rhodacal DS-10, 1,26 g Leinölfettsäure, 5,03 g Methacrylsäure 0,5 g Allylmethacrylat und 251,8 g Styrol, über 70 min zu dosiert während des Zulaufs wurde die Innentemperatur auf 92°C erhöht. Nach Ende des Zulaufs wurde die Innentemperatur über 20 min auf 89 °C gesenkt. Anschließend wurde Vorelmusion 3 bestehend aus 40 g Wasser, 0,84 g Rhodacal DS-10 und 62,92 g Styrol zugegeben Nach 15 min Einrührzeit wurden 221,5 g einer 2,5 Gew.-% wässrigen Natriumhydroxid Lösung über 60 min zu dosiert. 15 min nach Zulauf Ende wurden 12 g einer 8,33 Gew.-% wässrigen Lösung von *tert*-Butylhydroperoxid zusammen mit 14 g einer 7,1 Gew.-% wässrigen Rongalit-C® Lösung zugegeben und für weitere 10 min polymerisiert.

Feststoffgehalt: 30,1
pH-Wert: 8,5
Teilchengröße (PSDA, Volumen median): 391
Weißgrad: 81
Glasübergangstemperatur Hüllenstufenpolymer: 108°C

Vergleichsbeispiel 4:

Saat Dispersion AV2:

Aus 123,85 g Wasser 0,88 g Disponil® LDBS 20, 182 g n-Butylacrylat, 163,45 g Methylmethacrylat und 4,55 g Methacrylsäure wurde eine Voremulsion hergestellt. Die Vorlage, bestehend aus 1190,9 g Wasser, 24,97 g Disponil® FES 993, sowie 22,19 g der Voremulsion, wurde in einem Polymerisationsgefäß, welches mit einem Ankerrührer, Ruckflusskühler und zwei Zulaufgefäßen ausgestattet war, in einer Stickstoffatmosphäre auf eine Temperatur von 80°C geheizt und nach Zugabe von 67,2 g einer 2,5 Gew.-% wässrigen Natriumperoxodisulfat-Lösung 15 min anpolymerisiert. Dann wurde der Rest der Voremulsion innerhalb von 60 min bei 80°C zu dosiert. Anschließend wurde noch 15 min polymerisiert und innerhalb von 20 min auf 55°C abgekühlt. Zur Abreicherung der Restmonomeren wurden dann 3,5 g einer 10 Gew.-% wässrigen *tert*-Butylhydroperoxid-Lösung sowie 2,19 g einer 10 Gew.-% wässrigen Rongalit C-Lösung zum Reaktionsgemisch zugegeben, nach einer Stunde rühren wurde auf 30°C abgekühlt und durch Zugabe von 4,38 g 25 Gew.-% wässrigen Ammoniak-Lösung der pH-Wert der Dispersion eingestellt.

Feststoffgehalt: 19,8%
Teilchengröße (PSDA, Volumen median): 34 nm

Dispersion BV3:

Die Vorlage, bestehend aus 401,5 g Wasser, 22,51 g der Saat Dispersion AV2 und 5,5 g Disolvine E-FE6 (Eisen-EDTA-Chelatkomplex (1 Gew.-%) wurde in einem Polymerisationsgefäß, welches mit einem Ankerrührer, Rückflusskühler und zwei Zulaufgefäßen ausgestattet war, in einer Stickstoffatmosphäre auf eine Temperatur von 82°C geheizt. Anschließend wurden 15,95 g einer 10 Gew.-% wässrigen *tert*-Butylhydroxid Lösung und 7,54 g einer 2,1 Gew.-% wässrigen Ascorbinsäure Lösung zugeben. Zehn Minuten nach Zugabe wurden in 90 min parallel 357,5 g Methylmethacrylat und eine Lösung von 8,25 g Disponil® FES 993 und 192,5 g Methacrylsäure in 715 g Wasser zu dosiert. Zusätzlich wurden parallel über 120 min 67,82 g einer 2,1 Gew.-% wässrigen Ascorbinsäure zu dosiert. Nach Zulauf Ende wurde das Zulaufgefäß mit 35 g Wasser gespült und für weitere 10 min polymerisiert.

Feststoffgehalt: 33,4%
pH-Wert: 3,8
Teilchengröße (PSDA, Volumen median): 147 nm
Glasübergangstemperatur Kernstufenpolymer: 122°C

Dispersion CV4

Die Vorlage, bestehend aus 425 g Wasser und 82,31 g von Dispersion BV3, wurde in einem Polymerisationsgefäß, welches mit einem Ankerrührer, Rückflusskühler und zwei Zulaufgefäßen ausgestattet war, in einer Stickstoffatmosphäre auf eine Temperatur von 81°C geheizt. Anschließend wurden 32,46 g einer 3,2 Gew.-% wässrige Natriumperoxodisulfat-Lösung über 60 min zu dosiert. Parallel wurden zunächst 9,44 g von Voremulsion 1, bestehend aus 21,4 g Wasser, 0,63 g Rhodacal DS-10 20, 3,76 g Methacrylsäure, 25,16 g Methylmethacrylat und 25,16 g Styrol, in 15 min zugefahren. Anschließend wurden die verbleibende 66,67 g der Voremulsion 1 in 45 min zugefahren, so dass Initiatorzulauf und der Zulauf der Voremulsion 1 zeitgleich enden. 30 min nach Ende der Zuläufe wurde Voremulsion 2 bestehend aus 114 g Wasser, 3,36 g Rhodacal DS-10, 1,26 g Leinölfettsäure, 5,03 g Methacrylsäure 0,5 g Allylmethacrylat und 251,8 g Styrol, über 70 min zu dosiert während des Zulaufs wurde die Innentemperatur auf 92°C erhöht. Nach Ende des Zulaufs wurde die Innentemperatur über 20 min auf 89 °C gesenkt. Anschließend wurde Vorelmusion 3 bestehend aus 40 g Wasser, 0,84 g Rhodacal DS-10 und 62,92 g Styrol zugegeben Nach 15 min Einrührzeit wurden 221,5 g einer 2,5 Gew.-% wässrigen Natriumhydroxid Lösung über 60 min zu dosiert. 15 min nach Zulauf Ende wurden 12 g einer 8,33 Gew.-% wässrigen Lösung von tert-Butylhydroperoxid zusammen mit 14 g einer 7,1 Gew.-% wässrigen Rongalit-C® Lösung zugegeben und für weitere 10 min polymerisiert

Feststoffgehalt: 29,9
pH-Wert: 8,7
Teilchengröße (PSDA, Volumen median): 412 nm
Weißgrad: 42
Glasübergangstemperatur Hüllenstufenpolymer: 108°C

**Patentansprüche**

1. Verfahren zur Herstellung von organischen Hohlteilchen durch Herstellung eines Mehrstufenemulsionspolymers

durch sequentielle Polymerisation

(i) wobei das Mehrstufen-Emulsionspolymer mindestens ein Kernstufenpolymer und ein Hüllstufenpolymer umfasst, und das Kernstufenpolymer als polymerisierte Einheiten von 5 bis 99,5 Gew.-% bezogen auf das Gewicht des Kernstufenpolymers, mindestens eines hydrophilen ethylenisch ungesättigten Monomers, und von 0 bis 95 Gew.-%, bezogen auf das Gewicht des Kernstufenpolymers, mindestens eines nicht-ionischen ethylenisch ungesättigtem Monomers sowie 0,5 bis 20 Gew.-% mindestens eines nicht-ionischen polyalkylenoxidhaltigen Additivs bezogen auf das Gewicht des Kernstufenpolymers umfasst, und wobei das Hüllstufenpolymer als polymerisierte Einheiten mindestens 50 Gew.-% eines nicht-ionischen ethylenisch ungesättigten Monomers umfasst, sowie
ii) Neutralisation bis zu einem pH-Wert von mindestens 7,5 der so gebildeten Partikel mit mindestens einer Base, sowie gegebenenfalls Polymerisation weiterer Schalen enthaltend mindestens ein nicht-ionisch ethylenisch ungesättigtes Monomer.

**2.** Verfahren zur Herstellung von organischen Hohlteilchen durch Herstellung eines Mehrstufenemulsionspolymers durch sequentielle Polymerisation

(i) wobei das Mehrstufen-Emulsionspolymer mindestens ein Kernstufenpolymer und ein Hüllstufenpolymer umfasst, und das Kernstufenpolymer als polymerisierte Einheiten von 5 bis 99,5 Gew.-% bezogen auf das Gewicht des Kernstufenpolymers, eines hydrophilen ethylenisch ungesättigten Monomers, und von 0 bis 95 Gew.-%, bezogen auf das Gewicht des Kernstufenpolymers, mindestens eines nicht-ionischen ethylenisch ungesättigtem Monomers sowie 0,5 bis 20 Gew.-% mindestens eines nicht-ionischen polyalkylenoxidhaltigen Additivs bezogen auf das Gewicht des Kernstufenpolymers umfasst, und wobei das Hüllstufenpolymer als polymerisierte Einheiten mindestens 50 Gew.-% eines nicht-ionischen ethylenisch ungesättigten Monomers umfasst, sowie
ii) Neutralisation bis zu einem pH-Wert von mindestens 7,5 der so gebildeten Partikel mit mindestens einer Base, unter Anwesenheit von mindestens 0,5 Gew.-% eines nicht-ionischen ethylenisch ungesättigten Weichmachermonomers, bezogen auf das Gesamtgewicht des Kernschalepolymers,
iii) anschließender Polymerisation des nicht-ionischen ethylenisch ungesättigten Weichmachermonomers gegebenenfalls durch weitere Zugabe eines oder mehrerer nicht-ionischer ethylenisch ungesättigter Monomere
iv) sowie gegebenenfalls Polymerisation weiterer Schalen enthaltend mindestens ein nicht-ionisches ethylenisch ungesättigtes Monomer.

**3.** Verfahren gemäß Anspruch 1 oder 2, **dadurch gekennzeichnet, dass** die unter i) aufgeführten nicht-ionischen polyalkylenoxidhaltigen Additive ausgewählt sind aus der Gruppe der Polysiloxan-Polyalkylenoxid-Copolymere, wie Polysiloxan-Polyalkylenoxid-graft-Copolymere mit Kammstruktur, Polysiloxan-Polyalkylenoxid-graft-Copolymere mit $\alpha$-$\omega$-Struktur, Polysiloxan-Polyalkylenoxid-graft-Copolymere mit ABA oder BAB Blockstrukturen oder weiteren Abfolgen von Polyalkylenoxid- Polysiloxan- Blöcken, verzweigte Polysiloxan-Polyalkylenoxid-Copolymere, Polysiloxan-Polyalkylenoxid-graft-Copolymere mit Polyester, (fluorierten-) (Poly-)Alkyl-, Polyacrylat- Seitenketten; Copolymere von Propylenoxid und Ethylenoxid, Blockcopolymere von Propylenoxid und Ethylenoxid, Polyalkyenoxid-Poly(meth)acrylat-Copolymere, Polyalkyenoxid-(Poly)alkyl-Copolymere, Poly(alkylenoxid)-Poly((meth)acrylat)-Blockcopolymer, fluorierte Alkylesterpolyalkylenoxide und Polyalkoxylate und hochverzweigte Polyalkylenoxide, bevorzugt Polysiloxan-Polyalkylenoxid-graft-Copolymere mit Kammstruktur, oder Gemischen davon.

**4.** Verfahren gemäß einem der Ansprüche 1 bis 3, **dadurch gekennzeichnet, dass** die unter i) aufgeführten nicht-ionischen polyalkylenoxidhaltigen Additive ausgewählt sind aus der Gruppe der Polysiloxan-Polyalkylenoxid-graft-Copolymere mit Kammstruktur, der Polysiloxan-Polyalkylenoxid-graft-Copolymere mit $\alpha$-$\omega$-Struktur oder Gemischen davon.

**5.** Verfahren gemäß einem der Ansprüche 1 bis 4, **dadurch gekennzeichnet, dass** die unter i) aufgeführten nicht-ionischen polyalkylenoxidhaltigen Additive ausgewählt sind aus der Gruppe der Polysiloxan-Polyalkylenoxid-graft-Copolymere mit Kammstruktur der allgemeinen Formel (I):

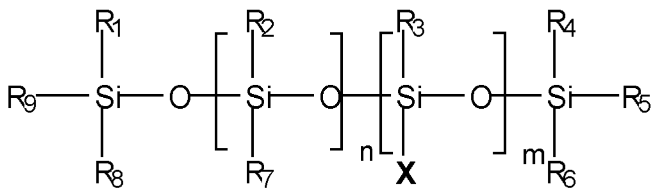

(I)

wobei

R1 bis R9 unabhängig voneinander H oder Alkyl ($-(CH_2)_nCH_3$ (n=0-20)) oder OH oder O-Alkyl ($-O-(CH_2)_nCH_3$ (n=0-20)) oder Allyl ($-(CH_2)-CH=CH_2$) oder O-Allyl ($-O-(CH_2)-CH=CH_2$) oder Phenyl oder Alkylester bedeuten
n 0-1000 bedeutet,
m 1-100 bedeutet,
X die folgende Struktur bedeutet:

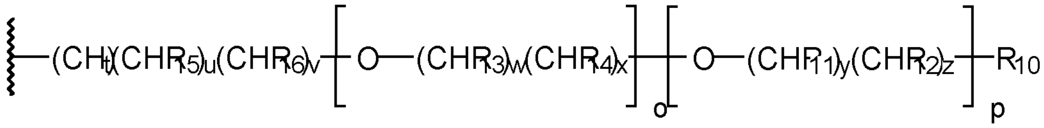

**wobei**

**R10** OH oder O-Alkyl ($-O-(CH_2)_nCH_3$ (n=0-20)) oder O-Allyl ($-O-(CH_2)-CH=CH_2$) oder O-Phenyl oder einen Alkylester bedeutet
R11 bis R16 können unabhängig voneinander H oder Alkyl ($-(CH_2)_nCH_3$ (n=0-20)) oder Phenyl bedeuten
o bedeutet 0-100,
p bedeutet 1-100,
t bedeutet 0 oder 2,
u bedeutet 0-10,
v bedeutet 0-10,
w, x, y, z können unabhängig voneinander gleich oder verschieden 1-10 bedeuten.

6. Verfahren gemäß einem der Ansprüche 1 bis 5, **dadurch gekennzeichnet, dass** die unter i) aufgeführten nicht-ionischen polyalkylenoxidhaltigen Additive in Mengen von 1 bis 5 Gew.-% mindestens eines nicht-ionischen polyalkylenoxidhaltigen Additivs bezogen auf das Gewicht des Kernstufenpolymers zugegeben werden.

7. Verfahren gemäß einem der Ansprüche 2 bis 6, **dadurch gekennzeichnet, dass** die unter ii) beschriebene Neutralisation unter einer der folgenden Bedingungen (a-d) erfolgt

(a) es findet keine Homopolymerisation des Weichmachermonomers statt
(b) in Anwesenheit eines Weichmachermonomers mit einer Ceiling Temperatur kleiner 181°C,
(c) nachdem man die Polymerisation durch Zugabe eines Inhibitors oder Reduktionsmittels gestoppt hat, oder
(d) wenn die Gesamtmenge des Initiators nur bis zu 0,5 Gew.-% des Hüllstufenpolymers beträgt und entweder vor Start der Zugabe der Monomeren des Hüllstufenpolymers zugegeben wird oder nur während der ersten 50% der Monomerzugabe des Hüllstufenpolymers zugegeben wird.

8. Verfahren gemäß einem der Ansprüche 2 bis 7, **dadurch gekennzeichnet, dass** die unter (iii) aufgeführten Weichmachermonomere ausgewählt sind aus der Gruppe Styrol, $\alpha$-Me-thylstyrol, Vinyltoluol, Ethylen, Butadien, Vinylacetat, Vinylchlorid, Vinylidenchlorid, Acrylnitril, Acrylamid, Methacrylamid, ($C_1$-$C_{20}$)Alkyl- oder ($C_3$-$C_{20}$)Alkenylester der Acryl- oder Methacrylsäure, Methacrylat, Methylmethacrylat, Ethylacrylat, Ethylmethacrylat, Butylacrylat, Butylmethacrylat, 2-Ethylhexylacrylat, 2-Ethylhexylmethacrylat, Benzylacrylat, Benzylmethacrylat, Laurylacrylat, Laurylmethacrylat, Oleylacrylat, Oleylmethacrylat, Palmitylacrylat, Palmitylmethacrylat, Stearylacrylat, Stearylmethacrylat, Ester der 2-Phenylacrylsäure / Atropasäure (z.B. Methyl, Ethyl, n-Propyl, n-Butyl), 2-Methyl-2-buten, 2,3-Dimethyl-2-buten, 1,1-Diphenylethen, 1,2-Diphenylethen, Methyl-2-tert-butylacrylat oder Maleinsäureanhydrid.

**9.** Verfahren gemäß einem der Ansprüche 2 bis 8, **dadurch gekennzeichnet** das die nicht-ionischen ethylenisch ungesättigten Weichmachermonomere, die unter Bedingungen, bei denen noch ein wesentlicher Radikalfluss nachzuweisen ist, keine Homopolymerisation aufweisen, ausgewählt sind aus der Gruppe Maleinsäureanhydrid, Stilben oder $\alpha$-Methylstyrol.

**10.** Verfahren gemäß einem der Ansprüche 2 bis 9, **dadurch gekennzeichnet** das die nicht-ionischen ethylenisch ungesättigten Weichmachermonomere mit einer Ceiling Temperatur kleiner 181°C ausgewählt sind aus der Gruppe $\alpha$- Methylstyrol, Ester der 2-Phenylacrylsäure / Atropasäure (z.B. Methyl, Ethyl, n-Propyl, n-Butyl), 2-Methyl-2-buten, 2,3-Di-methyl-2-buten, 1,1-Diphenylethen oder Methyl-2-tert-butylacrylat.

**11.** Verfahren gemäß einem der Ansprüche 1 bis 10, **dadurch gekennzeichnet, dass** die mittlere Teilchengröße im ungequollenen Zustand des Kernstufenpolymers, enthaltend Saat und Quellsaat, 50 bis 300 nm beträgt.

**12.** Verfahren gemäß einem der Ansprüche 1 bis 11, **dadurch gekennzeichnet, dass** die Glasübergangstemperatur, bestimmt nach der Fox-Gleichung, des Kernstufenpolymers in protoniertem Zustand zwischen -20°C und 150°C liegt.

**13.** Verfahren gemäß einem der Ansprüche 1 bis 12, **dadurch gekennzeichnet, dass** das Hüllstufenpolymer in protoniertem Zustand eine Glasübergangstemperatur, bestimmt nach der Fox-Gleichung, zwischen -60°C bis 120°C besitzt.

**14.** Verfahren gemäß einem der Ansprüche 1 bis 13, **dadurch gekennzeichnet, dass** die Teilchengröße des Kernschalepolymers im ungequollenen Zustand 60 nm bis 1000 nm beträgt.

**15.** Verfahren gemäß einem der Ansprüche 1 bis 14, **dadurch gekennzeichnet, dass** die unter (ii) aufgeführten Neutralisation mit einer oder mehreren Basen ausgewählt aus der Gruppe der Alkali- oder Erdalkaliverbindungen wie Natriumhydroxid, Kaliumhydroxid, Calciumhydroxid, Magnesiumoxid, Natriumcarbonat; Ammoniak; primäre, sekundäre und tertiäre Amine, wie Ethylamin, Propylamin, Monoisopropylamin, Monobutylamin, Hexylamin, Ethanolamin, Dimethylamin, Diethylamin, Di-n-propylamin, Tributylamin, Triethanolamin, Dimethoxyethylamin, 2-Ethoxyethylamin, 3-Ethoxypropylamin, Dimethylethanolamin, Diisopropanolamin, Morpholin, Ethylendiamin, 2-Diethylaminethylamin, 2,3-Diamino-propan, 1,2-Propylendiamin, Dimethylaminopropylamin, Neopentandiamin, Hexamethylendiamin, 4,9-Dioxadodecan-1,12-diamin, Polyethylenimin, Polyvinylamin oder Mischungen davon erfolgt.

**16.** Emulsionspolymerteilchen erhältlich durch das Verfahren gemäß einem der Ansprüche 1 bis 15.

**17.** Emulsionspolymerteilchen gemäß Anspruch 16, **dadurch gekennzeichnet, dass** der Weißgrad der Polymerisatteilchen größer 70 ist.

**18.** Verwendung der gemäß einem Verfahren der Ansprüche 1 bis 15 hergestellten Polymerisatteilchen in Anstrichmitteln, Papierbeschichtungen, Schäumen, Pflanzenschutzmitteln, Tinten, thermoplastischen Formmassen oder kosmetischen Mitteln.

**19.** Anstrichmittel enthaltend ein gemäß den Ansprüchen 1 bis 15 hergestelltes Polymerisatteilchen **dadurch gekennzeichnet, dass** der Weißgrad der Polymerisatteilchen größer 70 ist.

**20.** Anstrichmittel enthaltend ein gemäß den Ansprüchen 1 bis 15 hergestelltes Polymerisatteilchen **dadurch gekennzeichnet, dass** der Weißgrad der Polymerisatteilchen größer 79 ist.

**21.** Verwendung der polyalkylenoxidhaltigen Additive gemäß einem der Ansprüche 1 bis 15 zur Herstellung von Emulsionspolymerteilchen.

**22.** Verwendung der polyalkylenoxidhaltigen Additive gemäß Anspruch 21, **dadurch gekennzeichnet, dass** der Weißgrad der Polymerisatteilchen größer 70 ist.

## Claims

**1.** A method of producing hollow organic particles by producing a multistaged emulsion polymer by sequential polymerization

(i) wherein the multistaged emulsion polymer comprises at least a core stage polymer and a sheath stage polymer, and the core stage polymer comprises by way of polymerized units from 5 to 99.5 wt%, based on the weight of the core stage polymer, of at least one hydrophilic ethylenically unsaturated monomer, and from 0 to 95 wt%, based on the weight of the core stage polymer, of at least one nonionic ethylenically unsaturated monomer as well as 0.5 to 20 wt% of at least one nonionic polyalkylene oxide containing additive, based on the weight of the core stage polymer, and wherein the sheath stage polymer comprises by way of polymerized units not less than 50 wt% of a nonionic ethylenically unsaturated monomer, and also
ii) neutralizing the resultant particles with at least one base up to a pH of not less than 7.5, and also optionally polymerizing further shells comprising one or more than one nonionic ethylenically unsaturated monomer.

**2.** A method of producing hollow organic particles by producing a multistaged emulsion polymer by sequential polymerization

(i) wherein the multistaged emulsion polymer comprises at least a core stage polymer and a sheath stage polymer, and the core stage polymer comprises by way of polymerized units from 5 to 99.5 wt%, based on the weight of the core stage polymer, of a hydrophilic ethylenically unsaturated monomer, and from 0 to 95 wt%, based on the weight of the core stage polymer, of at least one nonionic ethylenically unsaturated monomer as well as 0.5 to 20 wt% of at least one nonionic polyalkylene oxide containing additive, based on the weight of the core stage polymer, and wherein the sheath stage polymer comprises by way of polymerized units not less than 50 wt% of a nonionic ethylenically unsaturated monomer, and also
ii) neutralizing the resultant particles with at least one base up to a pH of not less than 7.5, in the presence of not less than 0.5 wt% of a nonionic ethylenically unsaturated plasticizing monomer, based on the overall weight of the core-shell polymer,
iii) subsequently polymerizing the nonionic ethylenically unsaturated plasticizing monomer optionally by further admixing one or more nonionic ethylenically unsaturated monomers
iv) and also optionally polymerizing further shells comprising one or more than one nonionic ethylenically unsaturated monomer.

**3.** The method according to claim 1 or 2 wherein the nonionic polyalkylene oxide containing additives referred to under i) are selected from the group consisting of polysiloxane-polyalkylene oxide copolymers, such as polysiloxane-polyalkylene oxide graft copolymers of comb structure, polysiloxane-polyalkylene oxide graft copolymers of $\alpha,\omega$ structure, polysiloxane-polyalkylene oxide graft copolymers having ABA or BAB block structures or further sequences of polyalkylene oxide polysiloxane blocks, branched polysiloxane-polyalkylene oxide copolymers, polysiloxane-polyalkylene oxide graft copolymers having polyester, (fluorinated) (poly)alkyl, polyacrylate side chains; copolymers of propylene oxide and ethylene oxide, block copolymers of propylene oxide and ethylene oxide, polyalkylene oxide-poly(meth)acrylate copolymers, polyalkylene oxide-(poly)alkyl copolymers, poly(alkylene oxide)-poly((meth)acrylate) block copolymer, fluorinated alkyl ester polyalkylene oxides and polyalkoxylates and highly branched polyalkylene oxides, preferably polysiloxane-polyalkylene oxide graft copolymers of comb structure or mixtures thereof.

**4.** The method according to any of claims 1 to 3 wherein the nonionic polyalkylene oxide containing additives referred to under i) are selected from the group consisting of polysiloxane-polyalkylene oxide graft copolymers of comb structure, polysiloxane-polyalkylene oxide graft copolymers of $\alpha,\omega$ structure or mixtures thereof.

**5.** The method according to any of claims 1 to 4 wherein the nonionic polyalkylene oxide containing additives referred to under i) are selected from the group consisting of polysiloxane-polyalkylene oxide graft copolymers of comb structure of general formula (I) :

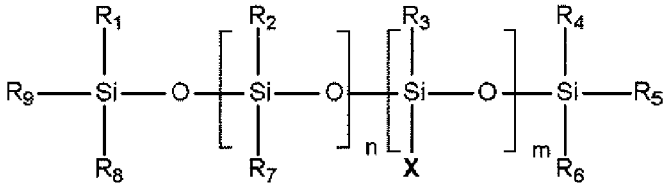

(I)

where

R1 to R9 are independently H or alkyl ($-(CH_2)_nCH_3$(n=0-20)) or OH or O-alkyl ($-O-(CH_2)_nCH_3$(n=0-20)) or allyl ($-(CH_2)-CH=CH_2$) or O-allyl ($-O-(CH_2)-CH=CH_2$) or phenyl or alkyl ester
n is 0-1000,
m is 1-100,
X is the following structure:

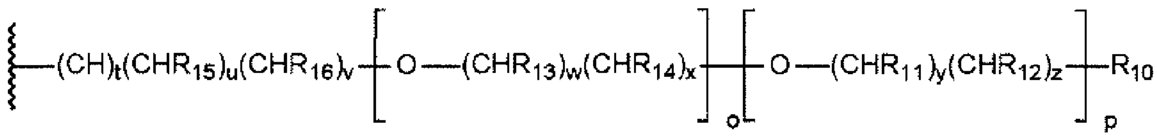

where

R10 is OH or O-alkyl ($-O-(CH_2)_nCH_3$ (n=0-20)) or O-allyl ($-O-(CH_2)-CH=CH_2$) or O-phenyl or an alkyl ester
R11 to R16 may each independently be H or alkyl ($-(CH_2)_nCH_3$ (n=0-20)) or phenyl,
o is 0-100,
p is 1-100,
t is 0 or 2,
u is 0-10,
v is 0-10,
w, x, y, z may each be independently 1-10 and the same or different.

**6.** The method according to any of claims 1 to 5 wherein the nonionic polyalkylene oxide containing additives referred under i) are admixed in amounts of 1 to 5 wt% of at least one nonionic polyalkylene oxide containing additive based on the weight of the core stage polymer.

**7.** The method according to any of claims 2 to 6 wherein the neutralizing described under ii) is effected under one of the following conditions (a-d) :

(a) the plasticizing monomer does not homopolymerize,
(b) in the presence of a plasticizing monomer having a ceiling temperature below 181°C,
(c) after the polymerization has been stopped by admixing an inhibitor or
a reducing agent, or
(d) when the overall amount of the initiator is only up to 0.5 wt% of the
sheath stage polymer and is admixed either before starting to mix the monomers of the sheath stage polymer or is only admixed during the first 50% of the monomer admixture of the sheath stage polymer.

**8.** The method according to any of claims 2 to 7 wherein the plasticizing monomers referred to under (iii) are selected from the group consisting of styrene, α-methylstyrene, vinyltoluene, ethylene, butadiene, vinyl acetate, vinyl chloride, vinylidene chloride, acrylonitrile, acrylamide, methacrylamide, ($C_1$-$C_{20}$) alkyl or ($C_3$-$C_{20}$) alkenyl esters of acrylic or methacrylic acid, methacrylate, methyl methacrylate, ethyl acrylate, ethyl methacrylate, butyl acrylate, butyl methacrylate, 2-ethylhexyl acrylate, 2-ethylhexyl methacrylate, benzyl acrylate, benzyl methacrylate, lauryl acrylate, lauryl methacrylate, oleyl acrylate, oleyl methacrylate, palmityl acrylate, palmityl methacrylate, stearyl acrylate, stearyl methacrylate, esters of 2-phenylacrylic acid/atropic acid (e.g., methyl, ethyl, n-propyl, n-butyl), 2-methyl-2-butene, 2,3-dimethyl-2-butene, 1,1-diphenylethene, 1,2-diphenylethene, methyl 2-tert-butylacrylate and maleic anhydride.

**9.** The method according to any of claims 2 to 8 wherein the nonionic ethylenically unsaturated plasticizing monomers which do not exhibit any homopolymerization under conditions where significant free-radical flux is still detectable are selected from the group consisting of maleic anhydride, stilbene or α-methylstyrene.

**10.** The method according to any of claims 2 to 9 wherein the nonionic ethylenically unsaturated plasticizing monomers having a ceiling temperature below 181°C are selected from the group consisting of α-methylstyrene, esters of 2-phenylacrylic acid/atropic acid (e.g., methyl, ethyl, n-propyl, n-butyl), 2-methyl-2-butene, 2,3-dimethyl-2-butene, 1,1-diphenylethene and methyl 2-tert-butylacrylate.

**11.** The method according to any of claims 1 to 10 wherein the average particle size in the unswollen state of the core stage polymer, comprising seed and swell-seed, is in the range from 50 to 300 nm.

**12.** The method according to any of claims 1 to 11 wherein the glass transition temperature, determined by the Fox equation, of the core stage polymer in the protonated state is between -20°C and 150°C.

**13.** The method according to any of claims 1 to 12 wherein the sheath stage polymer in the protonated state has a glass transition temperature, determined by the Fox equation, of between -60°C to 120°C.

**14.** The method according to any of claims 1 to 13 wherein the particle size of the core shell polymer in the unswollen state is in the range from 60 nm to 1000 nm.

**15.** The method according to any of claims 1 to 14 wherein the neutralizing recited under (ii) is effected with one or more bases selected from the group consisting of alkali metal or alkaline earth metal compounds such as sodium hydroxide, potassium hydroxide, calcium hydroxide, magnesium oxide, sodium carbonate; ammonia; primary, secondary and tertiary amines, such as ethylamine, propylamine, monoisopropylamine, monobutylamine, hexylamine, ethanolamine, dimethylamine, diethylamine, di-n-propylamine, tributylamine, triethanolamine, dimethoxyethylamine, 2-ethoxyethylamine, 3-ethoxypropylamine, dimethylethanolamine, diisopropanolamine, morpholine, ethylenediamine, 2-diethylaminoethylamine, 2,3-diaminopropane, 1,2-propylenediamine, dimethylaminopropylamine, neopentanediamine, hexamethylenediamine, 4,9-dioxadodecane-1,12-diamine, polyethyleneimine, polyvinylamine and mixtures thereof.

**16.** An emulsion polymer particle obtainable by the method according to any of claims 1 to 15.

**17.** An emulsion polymer particle according to claim 16 wherein the whiteness of the polymer particles is above 70.

**18.** The use of the polymer particles obtained according to a process of claims 1 to 15 in paints, paper coatings, foams, crop protection agents, liquid inks, thermoplastic molding compounds or cosmetic compositions.

**19.** A paint comprising a polymer particle obtained according to claims 1 to 15, wherein the whiteness of the polymer particles is above 70.

**20.** A paint comprising a polymer particle obtained according to claims 1 to 15, wherein the whiteness of the polymer particles is above 79.

**21.** The method of using the polyalkylene oxide containing additives according to any of claims 1 to 15 in the manufacture of emulsion polymer particles.

**22.** The method of using the polyalkylene oxide containing additives according to claim 21 wherein the whiteness of the polymer particles is above 70.

## Revendications

**1.** Procédé de fabrication de particules creuses organiques par fabrication d'un polymère en émulsion à plusieurs niveaux par polymérisation séquentielle,

(i) le polymère en émulsion à plusieurs niveaux comprenant au moins un polymère à niveaux de noyau et un polymère à niveaux d'enveloppe, et le polymère à niveaux de noyau comprenant en tant qu'unités polymérisées de 5 à 99,5 % en poids, par rapport au poids du polymère à niveaux de noyau, d'au moins un monomère éthyléniquement insaturé hydrophile, et de 0 à 95 % en poids, par rapport au poids du polymère à niveaux de noyau, d'au moins un monomère éthyléniquement insaturé non ionique, ainsi que 0,5 à 20 % en poids d'au moins un additif non ionique contenant du polyoxyde d'alkylène, par rapport au poids du polymère à niveaux de noyau, et le polymère à niveaux d'enveloppe comprenant en tant qu'unités polymérisées au moins 50 % en poids d'un monomère éthyléniquement insaturé non ionique, et

ii) neutralisation jusqu'à un pH d'au moins 7,5 des particules ainsi formées avec au moins une base, et éventuellement polymérisation d'enveloppes supplémentaires contenant au moins un monomère éthyléniquement insaturé non ionique.

**2.** Procédé de fabrication de particules creuses organiques par fabrication d'un polymère en émulsion à plusieurs niveaux par polymérisation séquentielle,

(i) le polymère en émulsion à plusieurs niveaux comprenant au moins un polymère à niveaux de noyau et un polymère à niveaux d'enveloppe, et le polymère à niveaux de noyau comprenant en tant qu'unités polymérisées de 5 à 99,5 % en poids, par rapport au poids du polymère à niveaux de noyau, d'un monomère éthyléniquement insaturé hydrophile, et de 0 à 95 % en poids, par rapport au poids du polymère à niveaux de noyau, d'au moins un monomère éthyléniquement insaturé non ionique, ainsi que 0,5 à 20 % en poids d'au moins un additif non ionique contenant du polyoxyde d'alkylène, par rapport au poids du polymère à niveaux de noyau, et le polymère à niveaux d'enveloppe comprenant en tant qu'unités polymérisées au moins 50 % en poids d'un monomère éthyléniquement insaturé non ionique, et

ii) neutralisation jusqu'à un pH d'au moins 7,5 des particules ainsi formées avec au moins une base, en présence d'au moins 0,5 % en poids d'un monomère plastifiant éthyléniquement insaturé non ionique, par rapport au poids total du polymère noyau-enveloppe, puis

iii) polymérisation du monomère plastifiant éthyléniquement insaturé non ionique, éventuellement par ajout supplémentaire d'un ou de plusieurs monomères éthyléniquement insaturés non ioniques, et

iv) éventuellement polymérisation d'enveloppes supplémentaires contenant au moins un monomère éthyléniquement insaturé non ionique.

3. Procédé selon la revendication 1 ou 2, **caractérisé en ce que** les additifs non ioniques contenant du polyoxyde d'alkylène indiqués en i) sont choisis dans le groupe constitué par les copolymères de polysiloxane-polyoxyde d'alkylène, tels que les copolymères greffés de polysiloxane-polyoxyde d'alkylène à structure de peigne, les copolymères greffés de polysiloxane-polyoxyde d'alkylène à structure $\alpha$-$\omega$, les copolymères greffés de polysiloxane-polyoxyde d'alkylène à structure séquencée ABA ou BAB ou d'autres dérivés de séquences de polyoxyde d'alkylène-polysiloxane, les copolymères de polysiloxane-polyoxyde d'alkylène ramifiés, les copolymères greffés de polysiloxane-polyoxyde d'alkylène avec des chaînes latérales polyester, (poly-)alkyle (fluoré), polyacrylate ; les copolymères d'oxyde de propylène et d'oxyde d'éthylène, les copolymères séquencés d'oxyde de propylène et d'oxyde d'éthylène, les copolymères de polyoxyde d'alkylène-poly(méth)acrylate, les copolymères de polyoxyde d'alkylène-(poly)alkyle, les copolymères séquencés de poly(oxyde d'alkylène)-poly((méth)acrylate), les esters alkyliques de polyoxyde d'alkylène fluorés et les polyalcoxylates et les polyoxydes d'alkylène hautement ramifiés, de préférence les copolymères greffés de polysiloxane-polyoxyde d'alkylène à structure de peigne, ou leurs mélanges.

4. Procédé selon l'une quelconque des revendications 1 à 3, **caractérisé en ce que** les additifs non ioniques contenant du polyoxyde d'alkylène indiqués en i) sont choisis dans le groupe constitué par les copolymères greffés de polysiloxane-polyoxyde d'alkylène à structure de peigne, les copolymères greffés de polysiloxane-polyoxyde d'alkylène à structure $\alpha$-$\omega$ ou leurs mélanges.

5. Procédé selon l'une quelconque des revendications 1 à 4, **caractérisé en ce que** les additifs non ioniques contenant du polyoxyde d'alkylène indiqués en i) sont choisis dans le groupe constitué par les copolymères greffés de polysiloxane-polyoxyde d'alkylène à structure de peigne de formule générale (I) :

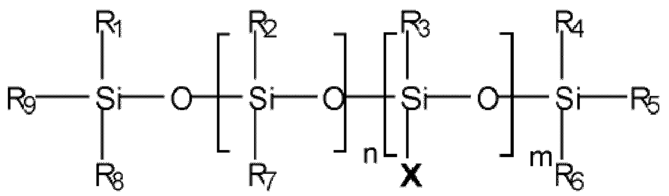

(I)

dans laquelle R1 à R9 signifient indépendamment les uns des autres H ou alkyl($-(CH_2)_nCH_3$(n = 0 à 20)) ou OH ou O-alkyle($-O-(CH_2)_nCH_3$ (n = 0 à 20)) ou allyl($-(CH_2)-CH=CH_2$) ou O-allyl($-O-(CH_2)-CH=CH_2$) ou phényle ou un ester alkylique,

n signifie 0 à 1 000,
m signifie 1 à 100,
X signifie la structure suivante :

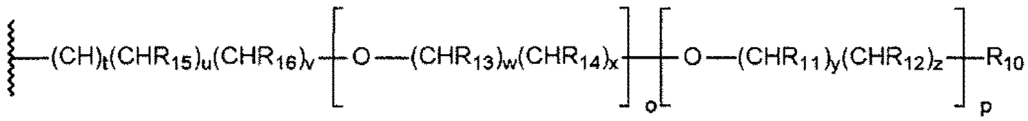

dans laquelle

R10 signifie OH ou O-alkyl(-O-$(CH_2)_nCH_3$(n = 0 à 20)) ou O-allyl (-O-$(CH_2)$-CH=$CH_2$) ou O-phényle ou un ester alkylique,
R11 à R16 peuvent signifier indépendamment les uns des autres H ou alkyl(-$(CH_2)_nCH_3$(n = 0 à 20)) ou phényle,
o signifie 0 à 100,
p signifie 1 à 100,
t signifie 0 ou 2,
u signifie 0 à 10,
v signifie 0 à 10,
w, x, y, z peuvent signifient indépendamment les uns des autres, de manière identique ou différente, 1 à 10.

**6.** Procédé selon l'une quelconque des revendications 1 à 5, **caractérisé en ce que** les additifs non ioniques contenant du polyoxyde d'alkylène indiqués en i) sont ajoutés en quantités de 1 à 5 % en poids d'au moins un additif non ionique contenant du polyoxyde d'alkylène, par rapport au poids du polymère à niveaux de noyau.

**7.** Procédé selon l'une quelconque des revendications 2 à 6, **caractérisé en ce que** la neutralisation décrite en ii) a lieu dans une des conditions (a à d) suivantes :

(a) une homopolymérisation du monomère plastifiant n'a pas lieu,
(b) en présence d'un monomère plastifiant ayant une température de plafond inférieure à 181 °C,
(c) après l'arrêt de la polymérisation par ajout d'un inhibiteur ou d'un réducteur, ou
(d) lorsque la quantité totale de l'initiateur n'est que de jusqu'à 0,5 % en poids du polymère à niveaux d'enveloppe, et est ajoutée soit avant le début de l'ajout des monomères du polymère à niveaux d'enveloppe, soit uniquement pendant les premiers 50 % de l'ajout des monomères du polymère à niveaux d'enveloppe.

**8.** Procédé selon l'une quelconque des revendications 2 à 7, **caractérisé en ce que** les monomères plastifiants indiqués en (iii) sont choisis dans le groupe constitué par le styrène, l'$\alpha$-méthylstyrène, le vinyltoluène, l'éthylène, le butadiène, l'acétate de vinyle, le chlorure de vinyle, le chlorure de vinylidène, l'acrylonitrile, l'acrylamide, le méthacrylamide, les esters alkyliques en ($C_1$-$C_{20}$) ou alcényliques en ($C_3$-$C_{20}$) de l'acide acrylique ou méthacrylique, l'acrylate de méthyle, le méthacrylate de méthyle, l'acrylate d'éthyle, le méthacrylate d'éthyle, l'acrylate de butyle, le méthacrylate de butyle, l'acrylate de 2-éthylhexyle, le méthacrylate de 2-éthylhexyle, l'acrylate de benzyle, le méthacrylate de benzyle, l'acrylate de lauryle, le méthacrylate de lauryle, l'acrylate d'oléyle, le méthacrylate d'oléyle, l'acrylate de palmityle, le méthacrylate de palmityle, l'acrylate de stéaryle, le méthacrylate de stéaryle, les esters de l'acide 2-phénylacrylique/de l'acide atropique (p. ex. méthylique, éthylique, n-propylique, n-butylique), le 2-méthyl-2-butène, le 2,3-diméthyl-2-butène, le 1,1-diphényléthène, le 1,2-diphényléthène, l'acrylate de méthyl-2-tert-butyle ou l'anhydride de l'acide maléique.

**9.** Procédé selon l'une quelconque des revendications 2 à 8, **caractérisé en ce que** les monomères plastifiants éthyléniquement insaturés non ioniques qui ne présentent pas d'homopolymérisation dans des conditions dans lesquelles un flux de radicaux important reste encore à établir sont choisis dans le groupe constitué par l'anhydride de l'acide maléique, le stilbène ou l'a-méthylstyrène.

**10.** Procédé selon l'une quelconque des revendications 2 à 9, **caractérisé en ce que** les monomères plastifiants éthyléniquement insaturés non ioniques ayant une température de plafond inférieure à 181 °C sont choisis dans le groupe constitué par l'$\alpha$-méthylstyrène, les esters de l'acide 2-phénylacrylique/de l'acide atropique (p. ex. méthylique, éthylique, n-propylique, n-butylique), le 2-méthyl-2-butène, le 2,3-diméthyl-2-butène, le 1,1-diphényléthène ou l'acrylate de méthyl-2-tert-butyle.

**11.** Procédé selon l'une quelconque des revendications 1 à 10, **caractérisé en ce que** la taille de particule moyenne à l'état non gonflé du polymère à niveaux de noyau, contenant une semence et une semence gonflée, est de 50 à 300 nm.

**12.** Procédé selon l'une quelconque des revendications 1 à 11, **caractérisé en ce que** la température de transition vitreuse, déterminée par l'équation de Fox, du polymère à niveaux de noyau à l'état protoné est comprise entre -20 °C et 150 °C.

**13.** Procédé selon l'une quelconque des revendications 1 à 12, **caractérisé en ce que** le polymère à niveaux d'enveloppe présente à l'état protoné une température de transition vitreuse, déterminée par l'équation de Fox, comprise entre -60 °C et 120 °C.

**14.** Procédé selon l'une quelconque des revendications 1 à 13, **caractérisé en ce que** la taille de particule du polymère noyau-enveloppe à l'état non gonflé est de 60 nm à 1 000 nm.

**15.** Procédé selon l'une quelconque des revendications 1 à 14, **caractérisé en ce que** la neutralisation indiquée en (ii) a lieu avec une ou plusieurs bases choisies dans le groupe constitué par les composés alcalins ou alcalino-terreux tels que l'hydroxyde de sodium, l'hydroxyde de potassium, l'hydroxyde de calcium, l'oxyde de magnésium, le carbonate de sodium ; l'ammoniac ; les amines primaires, secondaires et tertiaires, telles que l'éthylamine, la propylamine, la monoisopropylamine, la monobutylamine, l'hexylamine, l'éthanolamine, la diméthylamine, la diéthylamine, la di-n-propylamine, la tributylamine, la triéthanolamine, la diméthoxyéthylamine, la 2-éthoxyéthylamine, la 3-éthoxypropylamine, la diméthyléthanolamine, la diisopropanolamine, la morpholine, l'éthylène-diamine, la 2-diéthylaminoéthylamine, le 2,3-diamino-propane, la 1,2-propylène-diamine, la diméthylaminopropylamine, la néopentanediamine, l'hexaméthylène-diamine, la 4,9-dioxadodécane-1,12-diamine, la polyéthylène-imine, la polyvinylamine ou leurs mélanges.

**16.** Particules de polymère en émulsion pouvant être obtenues par le procédé selon l'une quelconque des revendications 1 à 15.

**17.** Particules de polymère en émulsion selon la revendication 16, **caractérisées en ce que** le degré de blancheur des particules de polymère est supérieur à 70.

**18.** Utilisation des particules de polymère fabriquées par un procédé selon les revendications 1 à 15 dans des peintures, des revêtements de papier, des mousses, des agents phytoprotecteurs, des encres, des matériaux de moulage thermoplastiques ou des agents cosmétiques.

**19.** Peinture contenant des particules de polymère fabriquées selon les revendications 1 à 15, **caractérisée en ce que** le degré de blancheur des particules de polymère est supérieur à 70.

**20.** Peinture contenant des particules de polymère fabriquées selon les revendications 1 à 15, **caractérisée en ce que** le degré de blancheur des particules de polymère est supérieur à 79.

**21.** Utilisation des additifs contenant du polyoxyde d'alkylène selon l'une quelconque des revendications 1 à 15 pour la fabrication de particules de polymère en émulsion.

**22.** Utilisation des additifs contenant du polyoxyde d'alkylène selon la revendication 21, **caractérisée en ce que** le degré de blancheur des particules de polymère est supérieur à 70.

## IN DER BESCHREIBUNG AUFGEFÜHRTE DOKUMENTE

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

### In der Beschreibung aufgeführte Patentdokumente


- EP 0915108 A
- EP 1904544 A
- EP 2511312 A
- US 8013081 B
- JP 2005187709 A
- EP 1141083 A
- DE 10211664
- WO 0056802 A
- WO 03062306 A
- WO 9619537 A
- WO 0354204 A
- WO 0393343 A
- WO 05037893 A
- WO 04020503 A
- DE 102004026904
- WO 9916810 A
- WO 05026234 A
- DE 102005009166
- DE 2501123


### In der Beschreibung aufgeführte Nicht-Patentliteratur


- **C. J. MCDONALD ; M. J. DEVON.** *Advances in Colloid and Interface Science,* 2002, vol. 99, 181-213
- **J. BRANDRUP ; E.H. IMMERGUT.** Polymer Handbook. II/316ff
- **AUTOREN M. SCHWARTZ ; R. BAUMSTARK.** *water-based acrylates for decorative coatings,* ISBN 3-87870-726-6